# EUROPÄISCHE PATENTSCHRIFT

(11) **EP 4 239 868 B1**
(45) Veröffentlichungstag und Bekanntmachung des Hinweises auf die Patenterteilung: **08.05.2024**
(21) Anmeldenummer: 22182228.1
(22) Anmeldetag: 30.06.2022
(51) Int. Cl.: H02K 15/04, H02K 15/00

(54) **VERFAHREN UND VORRICHTUNG ZUM UMFORMEN VON LEITERENDEN**
METHOD AND DEVICE FOR REFORMING CONDUCTOR ENDS
PROCÉDÉ ET DISPOSITIF DE FORMAGE DES EXTRÉMITÉS DE CONDUCTEUR

(30) Priorität: 04.03.2022 DE 102022105168
(43) Veröffentlichungstag der Anmeldung: 06.09.2023
(73) Patentinhaber: Grob-Werke GmbH & Co. KG, 87719 Mindelheim (DE)
(72) Erfinder: Wegscheider, Tobias, 87719 Mindelheim (DE); Bittner, Oliver, 87719 Mindelheim (DE); Jelen, Tomislav, 86157 Augsburg (DE); Schmid, Frederik, 89257 Illertissen (DE); Heide, Johannes, 89343 Jettingen (DE); Thurnhuber, Thomas, 87743 Egg a. d. Günz (DE)
(74) Vertreter: KASTEL Patentanwälte PartG mbB

(56) Entgegenhaltungen:
- EP-A1- 3 907 864
- WO-A1-2020/127718
- US-A1- 2009 302 705

## Beschreibung

Die Erfindung betrifft ein Leiterendenumformverfahren zum Umformen von Leiterenden, die aus einer sich ringförmig um eine Mittelachse erstreckenden Anordnung von Statornuten eines Statorbauteils zum Bilden eines Stators einer elektrischen Maschine in axialer Richtung vorstehen. Weiter betrifft die Erfindung eine Leiterendenumformvorrichtung zum Umformen von Leiterenden, die aus einer sich ringförmig um eine Mittelachse erstreckenden Anordnung von Statornuten eines Statorbauteils zum Bilden eines Stators einer elektrischen Maschine in axialer Richtung vorstehen.

Zum technologischen Hintergrund wird auf folgende Literaturstellen verwiesen:
[1] WO 2019/161832 A1
[2] WO 2019/161846 A1
[3] WO 2020/127718 A1
[4] DE 10 2018 103 930 A1
[5] EP 3 907 864 A1
[6] WO2019/114870 A1
[7] WO 2018/233774 A1
[8] WO 2019/007459 A1
[9] WO 2021/026576 A1
[10] WO 2019/201731 A1
[11] DE 10 2019 219 481 A1

Unter elektrischen Maschinen werden insbesondere Maschinen zum Umwandeln elektrischer Energie in Bewegungsenergie und Maschinen zum Umwandeln von Bewegungsenergie in elektrische Energie verstanden. Insbesondere sind darunter Elektromotoren und Generatoren zu verstehen.

Bei einigen Verfahren zur Herstellung von Statoren derartiger elektrischer Maschinen werden Enden von aus Drähten gebildeten Leitern miteinander verbunden oder sonst wie gemeinsam verarbeitet, wie z.B. gemeinsam geschnitten oder geformt.

Zum Beispiel gibt es Elektromotoren, bei denen Spulenwicklungen, insbesondere des Stators, aus unterschiedlichen Drahtstücken gebildet werden, deren Enden dann miteinander verbunden werden. Insbesondere sind Vorrichtungen und Verfahren zum Verbinden von Leiterenden, in der Regel Drahtenden, in der Form sogenannter "Hairpins" (beispielsweise haarnadelförmig gebogene Leiterstücke) zum Bilden von Statorwicklungen von elektrischen Maschinen bekannt, bei denen die Leiterenden (auch "Pins" genannt) miteinander verschweißt werden. Hierbei sind Vorrichtungen und Verfahren zum Positionieren und Verspannen der Leiterenden vor dem Verschweißen vorgesehen.

Um die Drahtenden korrekt verschweißen zu können, ist es vorteilhaft, vorher die aus den einzelnen Nuten des Gehäuses des Bauteils, zum Beispiel nach dem Einfügen von Hairpins oder dergleichen, vorstehenden Drahtenden zunächst umzuformen, insbesondere zu weiten und zu verschränken, z.B. um so miteinander zu verbindende Drahtendenpaare zu bilden.

Aus den Literaturstellen [1] bis [3] sind Verfahren und Vorrichtungen zum Schränken (Umformen der Leiterenden in Umfangsrichtung bezogen auf die Mittelachse des Bauteils) bekannt. Vor dem Schränken werden die Leiterenden oft geweitet (d.h. in radialer Richtung umgeformt). Verfahren und Vorrichtungen zum Weiten sind aus den Literaturstellen [4] und [5] sowie [9] bis [11] bekannt. Demnach ist es bekannt, als Weitwerkzeuge Greifer oder auch andere Einrichtungen zum Aufweiten zu verwenden.

Die Erfindung hat sich zur Aufgabe gestellt, Verfahren und Vorrichtungen zum Umformen von Leiterenden für eine flexiblere und dennoch prozesssicherere Fertigung von Statoren zur Verfügung zu stellen.

Zum Lösen dieser Aufgabe schafft die Erfindung ein Leiterendenumformverfahren nach Anspruch 1 sowie eine Leiterendenumformvorrichtung nach dem weiteren unabhängigen Anspruch.

Außerdem wird ein Computerprogramm mit Anweisungen zum Durchführen des Leiterendenumformverfahrens vorgeschlagen.

Vorteilhafte Ausgestaltungen sind Gegenstand der Unteransprüche.

Die Erfindung schafft gemäß einem ersten Aspekt davon ein Leiterendenumformverfahren zum Umformen von Leiterenden, die aus einer sich ringförmig um eine Mittelachse erstreckenden Anordnung von Statornuten eines Statorbauteils zum Bilden eines Stators einer elektrischen Maschine in axialer Richtung vorstehen. Das Leiterendenumformverfahren umfasst die Schritte:
a) Weiten der Leiterenden durch Biegen der Leiterenden in radialer Richtung mittels mehrerer Weitwerkezuge, wie z.B. Greifer oder auch andere Weitwerkzeuge, einer Radialbiegeeinrichtung, so dass durch das Weiten ein erster Teil der Leiterenden auf einer ersten radialen Lage liegt und ein zweiter Teil der Leiterenden auf einer zweiten radialen Lage liegt, und
b) Schränken der Leiterenden durch Biegen in Umfangsrichtung mittels einer Umfangsbiegeeinrichtung, die eine in einer ersten Drehrichtung drehbare erste Biegeeinheit mit einer ersten ringförmigen Anordnung von Aufnahmetaschen und eine konzentrisch hierzu angeordnete in der zweiten Drehrichtung drehbare zweite Biegeeinheit mit einer zweiten ringförmigen Anordnung von Aufnahmetaschen aufweist. Dabei umfasst Schritt b) die Schritte:
   b1) Einführen des in Schritt a) auf die erste radiale Lage geweiteten ersten Teils der Leiterenden in die erste Anordnung von Aufnahmetaschen, Einführen des in Schritt a) auf die zweite radiale Lage geweiteten zweiten Teils von Leiterenden in die zweite Anordnung von Aufnahmetaschen und
   b2) gegensätzliches Drehen der ersten und zweiten Biegeeinheiten, um den ersten Teil Leiterenden und den zweiten Teil Leiterenden in gegensätzliche Umfangsrichtungen zu biegen.

Erfindungsgemäß umfasst Schritt a) den Schritt:
a1) Erfassen wenigstens eines einzelnen Leiterendes durch wenigstens ein erstes Weitwerkzeug, wie z.B. einen ersten Greifer, um das so erfasste wenigstens eine einzelne Leiterende einzeln in radialer Richtung zu biegen, und gemeinsames Erfassen wenigstens eines Paars radial benachbarter Leiterenden durch wenigstens ein zweites Weitwerkzeug, wie z.B. einen zweiten Greifer, um das Paar radial benachbarter Leiterenden gemeinsam in radialer Richtung zu biegen, wobei Schritt a1) derart durchgeführt wird, dass ein dritter Teil der Leiterenden auf wenigstens einer radialen Zwischenposition zwischen der ersten und zweiten radialen Lage liegt.

Erfindungsgemäß umfasst Schritt b):
b0) Bereitstellen der ersten und zweiten Biegeeinheit derart, dass diejenige Biegeeinheit, die radial weiter außen liegt, radial innere Aufnahmetaschen aufweist, die zur radial inneren Seite hin offen sind, und diejenige Biegeeinheit, die radial weiter innen liegt, radial äußere Aufnahmetaschen aufweist, die zur radial äußeren Seite offen sind, wobei ein Teil der Aufnahmetaschen der ersten Anordnung auf der ersten radialen Lage liegt und ein anderer Teil der Aufnahmetaschen der ersten Anordnung radial versetzt hierzu auf einer radialen Zwischenposition liegt und/oder ein Teil der Aufnahmetaschen der zweiten Anordnung auf der zweiten radialen Lage liegt und ein anderer Teil der Aufnahmetaschen der zweiten Anordnung radial versetzt hierzu auf einer radialen Zwischenposition.

Erfindungsgemäß umfasst Schritt b1):
b1a) Einfügen von auf die wenigstens eine radiale Zwischenposition geweiteten Leiterenden in je eine Aufnahmetasche des anderen Teils der ersten oder zweiten Anordnung und Einfügen jeweils eines radial innen liegenden Leiterendes jedes Paars in Schritt a1) gemeinsam gebogener Leiterenden in eine der radial äußeren Aufnahmetaschen und des radial außen liegenden Leiterendes des Paars in eine der radial inneren Aufnahmetaschen.

Vorzugsweise umfasst Schritt a) den Schritt:
a0) Bereitstellen eines eigenen Radialbiege-Steuerdatensatzes für jedes einzeln radial zu biegende Leiterende oder jedes gemeinsam zu biegende Leiterendenpaar und einzelnes Ansteuern des jeweiligen Weitwerkzeuges wie z.B. des jeweiligen Greifers mittels des dem zu biegenden Leiterende zugeordneten Radialbiege-Steuerdatensatzes.

Vorzugsweise umfasst Schritt a) den Schritt:
a2) gleichzeitiges Verwenden verschiedener Weitwerkzeuge aus der Gruppe von Weitwerkzeugen, die ein Einzelweitwerkzeug zum Erfassen eines einzelnen Leiterendes, ein Leiterendenpaarweitwerkzeug zum Erfassen eines Paars von Leiterenden und ein Kombinationsweitwerkzeug, das an unterschiedlichen Erfassungsbereichen zum Erfassen eines einzelnen Leiterendes und zum Greifen eines Paars von Leiterenden ausgebildet ist.

Vorzugsweise umfasst Schritt a) den Schritt:
a2a) gleichzeitiges Verwenden verschiedener Greifer aus der Gruppe von Greifern, die einen Einzelgreifer zum Greifen eines einzelnen Leiterendes, einen Leiterendenpaargreifer zum Greifen eines Paars von Leiterenden und einen Kombinationsgreifer, der an unterschiedlichen Greifbereichen zum Greifen eines einzelnen Leiterendes und zum Greifen eines Paars von Leiterenden ausgebildet ist, als Weitwerkzeuge.

Vorzugsweise umfasst Schritt a) den Schritt:
a3) gleichzeitiges Erfassen mehrerer an gleicher radialer Position aus den Statornuten vorstehender Leiterenden mit den Weitwerkzeugen und Loslassen einzelner oder Paare der so erfassten Leiterenden nach unterschiedlicher Bewegung in radialer Richtung, um so den ersten Teil auf die erste radiale Lage, den dritten Teil auf die wenigstens eine radialen Zwischenposition und den zweiten Teil auf die zweite radiale Lage zu biegen.

Vorzugsweise umfasst Schritt a0) den Schritt:
a0a) Erzeugen der Radialbiege-Steuerdatensätze entsprechend eines für den herzustellenden Stator gewünschten Wickelschemas.

Vorzugsweise umfasst Schritt a0) den Schritt:
a0b) Erzeugen eines Master-Steuerdatensatz für ein Leiterende oder ein Leiterendenpaar, das gleich zu einer Gruppe von Leiterenden oder Leiterendenpaaren zu biegen ist und Erzeugen der weiteren Steuerdatensätze der gleich zu biegenden Gruppe von Leiterenden oder Leiterendenpaaren unter Kopieren des Master-Steuerdatensatzes.

Vorzugsweise umfasst Schritt a0) den Schritt:
a0c) Parametrierung der Sollposition und der Radialbiegebewegung für jedes Leiterende, um den Radialbiege-Steuerdatensatz zu erzeugen.

Vorzugsweise umfasst Schritt b0) den Schritt:
b01) Bereitstellen einer ersten Schränkkrone mit einer Ringwand, an deren axialen Ende die erste Anordnung von Aufnahmetaschen ausgebildet ist, als erste Biegeeinheit, wobei radial innere Aufnahmetaschen durch radial nach innen und am axialen Ende offen ausgebildete Innennuten und radial äußere Aufnahmetaschen durch radial außen und am axialen Ende offen ausgebildete Außennuten gebildet sind.

Vorzugsweise umfasst Schritt b0) den Schritt:
b02) Bereitstellen einer zweiten Schränkkrone mit einer Ringwand, an deren axialen Ende die zweite Anordnung von Aufnahmetaschen ausgebildet ist, als zweite Biegeeinheit, wobei radial innere Aufnahmetaschen durch radial nach innen und am axialen Ende offen ausgebildete Innennuten und radial äußere Aufnahmetaschen durch radial außen und am axialen Ende offen ausgebildete Außennuten gebildet sind.

Bei bevorzugten Ausgestaltungen ist zumindest eine der Schränkkronen mit inneren und äußeren Aufnahmetaschen ausgebildet. Je nach Ausgestaltung und Anordnung können die inneren oder die äußeren Aufnahmetaschen auf der wenigstens einen radialen Zwischenposition liegen.

Gemäß einem weiteren Aspekt schafft die Erfindung eine Leiterendenumformvorrichtung zum Umformen von Leiterenden, die aus einer sich ringförmig um eine Mittelachse erstreckenden Anordnung von Statornuten eines Statorbauteils zum Bilden eines Stators einer elektrischen Maschine in axialer Richtung vorstehen, umfassend:
eine Radialbiegeeinrichtung zum Weiten der Leiterenden mit mehreren Weitwerkzeugen wie z.B. Greifern, welche Weitwerkzeuge zum Biegen der Leiterenden in radialer Richtung derart ausgebildet sind, dass nach dem Biegen ein erster Teil der Leiterenden auf einer ersten radialen Lage liegt und ein zweiter Teil der Leiterenden auf einer zweiten radialen Lage liegt,
eine Umfangsbiegeeinrichtung zum Schränken der Leiterenden durch Biegen in Umfangsrichtung, wobei die Umfangsbiegeeinrichtung eine in einer ersten Drehrichtung drehbare erste Biegeeinheit mit einer ersten ringförmigen Anordnung von Aufnahmetaschen und eine konzentrisch hierzu angeordnete in der zweiten Drehrichtung drehbare zweite Biegeeinheit mit einer zweiten ringförmigen Anordnung von Aufnahmetaschen aufweist,
und eine Steuerung, die dazu ausgebildet ist, die Leiterendenumformvorrichtung anzusteuern zum
   a) Weiten der Leiterenden durch Biegen der Leiterenden in radialer Richtung mittels der mehreren Weitwerkzeuge (z.B. Greifer) der Radialbiegeeinrichtung, so dass durch das Weiten ein erster Teil der Leiterenden auf einer ersten radialen Lage liegt und ein zweiter Teil der Leiterenden auf einer zweiten radialen Lage liegt, und
   b) Schränken der Leiterenden durch Biegen in Umfangsrichtung mittels der Umfangsbiegeeinrichtung durch
   b1) Einführen des in Schritt a) auf die erste radiale Lage geweiteten ersten Teils der Leiterenden in die erste Anordnung von Aufnahmetaschen, Einführen des in Schritt a) auf die zweite radiale Lage geweiteten zweiten Teils von Leiterenden in die zweite Anordnung von Aufnahmetaschen und
   b2) gegensätzliches Drehen der ersten und zweiten Biegeeinheiten, um den ersten Teil Leiterenden und den zweiten Teil Leiterenden in gegensätzliche Umfangsrichtungen zu biegen.

Erfindungsgemäß ist weiter vorgesehen, dass von der ersten und zweiten Biegeeinrichtung diejenige Biegeeinheit, die radial weiter außen liegt, radial innere Aufnahmetaschen aufweist, die zur radial inneren Seite hin offen sind, und diejenige Biegeeinheit, die radial weiter innen liegt, radial äußere Aufnahmetaschen aufweist, die zur radial äußeren Seite offen sind, wobei ein Teil der Aufnahmetaschen der ersten Anordnung auf der ersten radialen Lage liegt und ein anderer Teil der Aufnahmetaschen der ersten Anordnung radial versetzt hierzu auf einer radialen Zwischenposition liegt und/oder ein Teil der Aufnahmetaschen der zweiten Anordnung auf der zweiten radialen Lage liegt und ein anderer Teil der Aufnahmetaschen der zweiten Anordnung radial versetzt hierzu auf einer radialen Zwischenposition.

Erfindungsgemäß ist die Steuerung weiter dazu ausgebildet, beim Weiten gemäß Schritt a) die Leiterendenumformvorrichtung anzusteuern zum
a1) Erfassen wenigstens eines einzelnen Leiterendes durch wenigstens ein erstes Weitwerkzeug, wie z.B. einen ersten Greifer, um das so erfasste Leiterende einzeln in radialer Richtung zu biegen, und gemeinsames Erfassen wenigstens eines Paars radial benachbarter Leiterenden durch wenigstens ein zweites Weitwerkzeug wie z.B. einen zweiten Greifer, um das Paar radial benachbarter Leiterenden gemeinsam in radialer Richtung zu biegen, wobei die Steuerung eingerichtet ist, ein Ansteuern der Greifer so durchzuführen, dass ein dritter Teil der Leiterenden auf wenigstens einer radialen Zwischenposition zwischen der ersten und zweiten radialen Lage liegt.

Erfindungsgemäß ist die Steuerung weiter dazu ausgebildet, beim Einführen gemäß Schritt b1) die Leiterendenumformvorrichtung anzusteuern zum
b1a) Einfügen von auf die wenigstens eine radiale Zwischenposition geweiteten Leiterenden in je eine Aufnahmetasche des anderen Teils der ersten oder zweiten Anordnung und Einfügen jeweils eines radial innen liegenden Leiterenden jedes Paars in Schritt a1) gemeinsam gebogener Leiterenden in eine der radial äußeren Aufnahmetaschen und des radial außen liegenden Leiterendes des Paars in eine der radial inneren Aufnahmetaschen.

Es ist bevorzugt, dass die Steuerung dazu ausgebildet ist, die Weitwerkzeuge wie z.B. Greifer der Radialbiegeeinrichtung aufgrund einzelner eigener Radialbiege-Steuerdatensätze für jedes einzeln radial zu biegende Leiterende oder jedes gemeinsam zu biegende Leiterendenpaar einzeln anzusteuern.

Es ist bevorzugt, dass die Radialbiegeeinrichtung unterschiedliche Weitwerkzeuge aus der Gruppe von Weitwerkzeugen aufweist, die ein Einzelweitwerkzeug zum Erfassen eines einzelnen Leiterendes, ein Leiterendenpaarweitwerkzeug zum Erfassen eines Paars von Leiterenden und ein Kombinationsweitwerkzeug, das an unterschiedlichen Erfassungsbereichen zum Erfassen eines einzelnen Leiterendes und zum Erfassen eines Paars von Leiterenden ausgebildet ist.

Es ist bevorzugt, dass die Radialbiegeeinrichtung als Weitwerkzeuge unterschiedliche Greifer aus der Gruppe von Greifern aufweist, die einen Einzelgreifer zum Greifen eines einzelnen Leiterendes, einen Leiterendenpaargreifer zum Greifen eines Paars von Leiterenden und einen Kombinationsgreifer, der an unterschiedlichen Greifbereichen zum Greifen eines einzelnen Leiterendes und zum Greifen eines Paars von Leiterenden ausgebildet ist.

Es ist bevorzugt, dass die Radialbiegeeinrichtung als Weitwerkzeuge Greifer mit einer ersten Greiferbacke und einer zweiten Greiferbacke aufweist, die zum Greifen aufeinander zu und zum Lösen voneinander weg bewegbar sind, wobei an wenigstens einer der Greiferbacken zwischen zwei Schultern eine Aufnahmenut für das oder die zu greifenden Leiterenden ausgebildet ist, die bei einem Einzelgreifer zum Umfassen eines einzelnen Leiterendes und bei Leiterendenpaargreifern zum Umfassen des Paars Leiterenden ausgebildet ist.

Es ist bevorzugt, dass die Radialbiegeeinrichtung einen Kombinationsgreifer mit unterschiedlichen Greifabschnitten aufweist, von denen einer zum Greifen eines einzelnen Leiters und ein weiterer zum Greifen eines Paars von Leiterenden ausgebildet ist.

Es ist bevorzugt, dass die Steuerung weiter dazu ausgebildet ist, die Radialbiegeeinrichtung anzusteuern zum gleichzeitigen Erfassen mehrerer an gleicher radialer Position aus den Statornuten vorstehender Leiterenden mit den Weitwerkzeugen und Loslassen einzelner oder Paare der so erfassten Leiterenden nach unterschiedlicher Bewegung in radialer Richtung, um so den ersten Teil in die erste radiale Lage, den dritten Teil auf die wenigstens eine radiale Zwischenposition und den zweiten Teil in die zweite radiale Lage zu biegen.

Es ist bevorzugt, dass die Umfangsbiegeeinrichtung eine erste Schränkkrone mit einer Ringwand, an deren axialen Ende die erste Anordnung von Aufnahmetaschen ausgebildet ist, als erste Biegeeinheit aufweist, wobei radial innere Aufnahmetaschen durch radial nach innen und am axialen Ende offen ausgebildete Innennuten und radial äußere Aufnahmetaschen durch radial außen und am axialen Ende offen ausgebildete Außennuten gebildet sind.

Es ist bevorzugt, dass die Umfangsbiegeeinrichtung eine zweite Schränkkrone mit einer Ringwand, an deren axialen Ende die zweite Anordnung von Aufnahmetaschen ausgebildet ist, als zweite Biegeeinheit aufweist, wobei radial innere Aufnahmetaschen durch radial nach innen und am axialen Ende offen ausgebildete Innennuten und radial äußere Aufnahmetaschen durch radial außen und am axialen Ende offen ausgebildete Außennuten gebildet sind.

Gemäß einem weiteren Aspekt schafft die Erfindung ein Computerprogramm, umfassend Befehle, die die Leiterendenumformvorrichtung nach einer der voranstehenden Ausgestaltungen veranlassen, das Leiterendenumformverfahren nach einer der voranstehenden Ausgestaltungen durchzuführen.

Vorzugsweise haben die erste radiale Lage und die zweite radiale Lage einen Abstand zueinander, die weniger als das Zweifache der in Radialrichtung gemessene radiale Dicke d der Leiterenden beträgt. Vorzugsweise ist dieser Abstand geringer als die radiale Dicke d der Leiterenden.

Vorzugsweise liegt die radiale Zwischenposition relativ zu der ersten oder der zweiten Lage um einen Betrag f*d in Radialrichtung versetzt, wobei d die radiale Dicke der Leiterenden und f ein Faktor mit 2<f<0,05, vorzugsweise 1,5<f<0,1, insbesondere 1 <f<0,2. Besonderes bevorzugt liegt die Zwischenposition mittig zwischen der ersten und der zweiten Lage.

Im Folgenden werden einige Vorteile, Funktionen und Besonderheiten von bevorzugten Ausführungsformen gegenüber dem Stand der Technik näher erläutert.

Bevorzugte Ausgestaltungen der Erfindung betreffen eine Methode und ein Werkzeug zum Weiten und Schränken eines Stators. Insbesondere liegen besondere Ausgestaltungen der Erfindung auf dem Gebiet der Herstellung von Statoren für die Elektromobilität.

Vorzugsweise ist zum Weiten eine Radialbiegeeinrichtung mit Kombiweitwerkzeugen, insbesondere Kombigreifern, mit zugehörigem Ablauf vorgesehen. Insbesondere ist ein Ablauf des Schritts des Weitens vorbestimmt, um den nachfolgenden Schritt des Schränkens zum Erreichen spezieller Spulenwicklungen vorzubereiten.

Vorzugsweise erfolgt eine gleichzeitige Verwendung von verschiedenen Weitwerkzeuge wie insbesondere Greifern zur Erzeugung eines Schemas (Einzel, Paare, Kombi).

Vorzugsweise ist eine Parametrierung der Einzelpins und Steuerung über Masterpins vorgesehen.

Vorzugsweise erfolgt ein Weiten auf verschiedene (radiale) Position (gleichzeitig Erfassen/Greifen aber unterschiedlich loslassen, mit Stopp oder On-the-Fly).

Vorzugsweise ist ein Schränkwerkzeug mit innen- und außengenuteten Schränkkronen vorgesehen. Damit kann ein Schränken von Einzelpins sowie von Pin-Pärchen speziell auf das erwünschte Wickelschema des Stators abgestimmt erfolgen.

Bevorzugte Ausgestaltungen der Erfindung finden Verwendung in einem Teilbereich der Elektromotorenfertigung, genauer dem Bereich der Statorenfertigung für Traktionsantriebe (elektrisch angetriebene Fahrzeuge, insbesondere PKW und LKW). Insbesondere werden Verfahren und Vorrichtungen gemäß Ausführungsbeispielen der Erfindung bei der Fertigung sogenannter Hairpinstatoren verwendet, welche sich durch ihre charakteristischen Kupferflachdrähte in Form von "Hairpins" auszeichnen. Die Hairpins sind insbesondere aus Kupfer oder dergleichen mit im Wesentlichen rechteckigem Querschnitt und äußerer Isolatorbeschichtung gebildet und weisen einen ersten Schenkel, einen zweiten Schenkel und eine etwa dachförmige Biegung dazwischen, den sogenannten Wickelkopf, auf. Die Hairpins werden vorzugsweise mit ihren Schenkeln axial in einen Kern aus aufeinander geschichteten Einzelblechen gefügt, wobei das Ende der Pins (Beispiel für Leiterenden) über das Blechpaket hinausragt. Die Anzahl der Nuten des Stators kann variieren, je nach gewünschter Polzahl. Zur Erzeugung eines Drehfeldes werden die aus dem Stator ragenden, geraden Drahtenden in einer speziellen Sequenz miteinander verschaltet, damit diese untereinander Polpaare bilden. Die durch die Beaufschlagung mit Wechselstrom entstehenden Magnetfelder führen durch abstoßende bzw. anziehende Kräfte zu einer Drehbewegung des Rotors.

Bei der Hairpinstatorherstellung werden zur Erzeugung eines elektrischen Flusses die Leiter gegeneinander rotiert, sodass ein Kontakt zwischen ausgewählten Leiterenden entsteht. Dazu werden die gerade aus dem Blechpaket hervorstehenden Leiterenden in einem ersten Schritt (oben Schritt a) genannt) radial aufgeweitet. Vorzugsweise werden dabei die Leiterenden durch einen Greifprozess fixiert und in radialer Richtung nach außen oder auch nach innen gebogen. Die dadurch entstehenden Abstände zwischen den einzelnen Leiterenden oder mehreren Leiterendenpaaren einer Nut sind vorteilhaft, um diese im nachfolgenden Prozess (oben Schritt b) genannt) mit Hilfe eines Schränkwerkzeuges (Beispiel für Umfangsbiegeeinrichtung) gegeneinander zu verdrehen. Zu diesem Zweck werden die geweiteten Leiterenden vorzugsweise in eine mit Nuten versehene Schränkkrone eingetaucht, welche in beliebiger Richtung rotiert werden kann. Durch die Rotation mehrerer solcher Schränkkronen können bestimmte Leiterenden zueinander platziert werden. Die zusammengehörenden Leiterenden (insbesondere Drahtenden) können z.B. anschließend über einen Schweißprozess miteinander verbunden werden. Um ein prozesssicheres Verbinden zu ermöglichen, dürfen dabei die Abstände zwischen den zu verbindenden Partnern nicht zu groß sein.

Gemäß der Literaturstelle [3] werden hierzu bereits Leiterendenpaare gemeinsam geweitet. Anschließend werden die gemeinsam geweiteten Leiterendenpaare mit außen- und innengenuteten Schränkkronen geschränkt. Auch mit anderen Weitwerkzeugen, wie sie aus [9] bis [11] bekannt sind, lässt sich wahlweise ein einzelnes oder gruppenweises, insbesondere paarweises Weiten durchführen.

Bei einigen Hairpin-Statoren gibt es Wickelschemata, bei denen lediglich Leiterendenpaare eines gemeinsamen Kranzes von Hairpins, erstreckend über zwei benachbarte Lagen, verbunden werden. Die elektrische Verbindung der Kränze erfolgt dann über Sonderpins oder über gesonderte Wickelköpfe. Nachdem in der Regel die Wickelköpfe vorher für die einzelnen Hairpins, bereits vor dem Stecken derselben zu Kränzen, geformt werden, ergibt sich damit ein höherer Aufwand bei der Herstellung und Bereitstellung der Hairpins.

Vorteilhafte Ausgestaltungen der Erfindung ermöglichen dagegen in flexibler und prozesssicherer Weise Wickelschemata, bei denen elektrische Verbindungen zwischen Kränzen durch Verbinden wenigstens eines Leiterendes des einen Kranzes mit wenigstens einem Leiterende des anderen Kranzes realisiert werden (ein Lagensprung wird auf der Schränkseite realisiert). Erreicht wird dies durch Anpassung des Weitens und Schränkens für unterschiedliche Leiterenden. Das Weiten und Schränken wird zwar etwas komplexer, dadurch lässt sich aber die Anzahl unterschiedlicher Wickelkopfgeometrien reduzieren. Vorteilhafte Ausgestaltungen der Erfindung ermöglichen trotz des komplexeren Weitens und Schränkens eine erhöhte oder gesteigerte Prozessstabilität, ohne dass zusätzliche Prozessschritte benötigt werden.

Vorteilhafte Ausgestaltungen der Erfindung ermöglichen ein flexibleres Fertigungsverfahren für Statoren, deren Lagesprung durch eine Kontaktierung von Leiterenden auf Zwischenpositionen realisiert werden, um mit einer geringeren Anzahl von unterschiedlichen Wickelkopfgeometrien auszukommen. Vorteilhafte Ausgestaltungen der Erfindung ermöglichen weiter, auch für komplexe Schränkvariationen einen zuverlässigen und positionsgetreuen Weit- und Schränkprozess zu etablieren, welcher maßgeblich zu einer Steigerung der Prozessstabilität nachfolgender Abläufe beiträgt. Vorzugsweise wird durch eine Kombination verschiedener Weitwerkzeuge, wie z.B. Werkzeuge für einzelne Leiterenden, für Leiterendenpaare sowie in kombinierter Form (für einzelne Leiterenden und für Leiterendenpaare) ein flexibler Fertigungsprozess ermöglicht. Dementsprechend sind vorzugsweise auch die Schränkwerkzeuge an die gegebenen Randbedingungen angepasst und optimiert. Vorzugsweise werden dabei die finalen Stellungen der Leiterenden des Stators möglichst genau durch die Weit- und Schränkprozesse abgebildet. Speziell ergeben sich hierbei Herausforderungen aufgrund einer großen Variantenvielfalt der geometrischen Gestaltung sowie der elektrischen Verschaltung des Stators. Die bei den Verfahren und Vorrichtungen gemäß bevorzugten Ausgestaltungen der Erfindung verwendeten Werkzeuge und Prozessabläufe lassen sich dementsprechend flexibel an das vorhandene Werkstück adaptieren, unter der Prämisse einer verbesserten Prozessstabilität sowie einer zumindest neutralen Taktzeit.

Bevorzugte Ausgestaltungen des Verfahrens und der Vorrichtung gemäß der Erfindung schaffen ein aufeinander abgestimmtes Konzept aus angepassten Werkzeugen und Prozessabläufen. Durch eine Differenzierung der einzelnen Weitwerkzeuge in Einzelweitwerkzeug, Doppelweitwerkzeug und Kombiweitwerkzeug wie insbesondere Einzel-, Doppel- und Kombigreifer kann ein auf den jeweils gewünschten Stator angepasstes Weitkonzept erarbeitet werden, bei dem in jedem Prozessschritt individuell jedes Weitwerkzeug wie z.B. jeder Greifer separat angesteuert und betätigt werden kann. Durch die Kombination von unterschiedlichen Weitwerkzeugen wie insbesondere Greifwerkzeugen und einer dazu abgestimmten Prozesssteuerung kann nahezu jedes Verschaltbild der Schränkseite eines Stators abgebildet werden.

Besonders bevorzugte Ausgestaltungen des Verfahrens und der Vorrichtung gemäß der Erfindung umfassen die Erzeugung eines speziellen Weit- und Schränkmusters, welches direkt die elektrische Verschaltung des Stators widerspiegelt und das sowohl regelmäßige wie auch unregelmäßige Schaltschemas mit und ohne Lagensprung auf der Schränkseite abbilden kann. Dabei kann unter anderem mehr als ein Durchmesser pro Lage realisiert werden. Über die lagegenaue Positionierung der Pins für den anschließenden Schränkprozess mit individuell gestalteten Schränkwerkzeugen, die bei einigen besonders bevorzugten Ausführungsformen sowohl über Außenals auch über Innennuten auf einem Werkzeug verfügen, kann ein, dem finalen Stand möglichst nahekommendes, Zwischenprodukt erzeugt werden. Dieses zeichnet sich durch einen möglichst minimalen Pinabstand zwischen den zusammengehörenden Pinenden des Stators aus.

Im Stand der Technik werden bisher nur sequenzielle Weit- und Schränkvorgänge beschrieben, die sich entweder mit der Bearbeitung eines Einzelpins oder mit der Bearbeitung eines regelmäßigen Paares beschäftigen. Dabei wird jedoch kein spezifischer Bezug auf die elektrische Verschaltung und damit die Stellung der Pins genommen. Bei einer bevorzugten Ausgestaltung des erfindungsgemäßen Prozesses und der dazu abgestimmten Vorrichtung kann eine positionsgenaue Bearbeitung der noch unverschweißten Hairpinenden erfolgen. Somit lassen sich alle zusammengehörigen Pins bereits während des Weit- und Schränkprozesses zu einem Paar zusammenführen. Auf eine mechanische Umformung bzw. Verschiebung der Pins im anschließenden Bearbeitungsschritt kann größtenteils verzichtet werden. Das wiederum führt zu einer erhöhten Prozesssicherheit in Bezug auf die Positionierung der Pinenden und damit einhergehend einer verminderten Ausschussquote der nachfolgenden Prozesse.

Bei dem erfindungsgemäßen Verfahren werden beim Weiten einige Leiterenden auf eine erste radiale Lage und einige Leiterenden auf eine zweite radiale Lage positioniert. Die auf die erste radiale Lage geweiteten Leiterenden werden zum Schränken in einer ersten Anordnung von Aufnahmetaschen an einer ersten Biegeeinheit aufgenommen, und die auf die zweite radiale Lage geweiteten Leiterenden werden zum Schränken in einer zweiten Anordnung von Aufnahmetaschen an einer zweiten Biegeeinheit aufgenommen. Durch ein relatives Verdrehen der Biegeeinheiten und somit der ersten und zweiten Anordnung von Aufnahmetaschen erfolgt das Schränken.

Zusätzlich werden aber weitere Leiterenden beim Weiten auf einer radialen Zwischenposition zwischen der ersten und der zweiten radialen Lage positioniert. Dies lässt sich insbesondere durch ein paarweises Erfassen, insbesondere Greifen, von Leiterenden oder durch Kombination von paarweisem und einzelnem Erfassen, insbesondere Greifen, erreichen.

Wenigstens eine Biegeeinheit der Umfangsbiegeeinrichtung weist bei bevorzugten Ausgestaltungen innere und äußere Aufnahmetaschen auf, um zusätzlich zu der zugeordneten Anordnung von Aufnahmetaschen noch eine andere Anordnung von Aufnahmetaschen auf der radialen Zwischenposition bereit zu stellen. Je nach Ausgestaltung und Anordnung können die inneren oder die äußeren Aufnahmetaschen auf der wenigstens einen radialen Zwischenposition liegen. So wie dies bereits grundsätzlich aus [3] bekannt ist, lassen sich durch nahe zueinander angeordnete und zueinander offene Aufnahmetaschen auch radial sehr nahe benachbarte Leiterenden relativ zueinander verschränken. Damit lassen sich dann zusätzlich zu den auf der ersten und zweiten radialen Lage geweiteten Leiterenden auch die auf die radiale Zwischenposition geweiteten Leiterenden prozesssicher schränken.

Damit ist eine große Flexibilität für das Schränken und Weiten derart erreichbar, dass beispielsweise auch zu verbindende Leiterendenpaare auf radialen Zwischenposition eng zueinander positioniert werden können.

Ein Ausführungsbeispiel wird im Folgenden anhand der beigefügten Zeichnungen näher erläutert. Darin zeigt:
Fig. 1 eine schematische Blockdarstellung eines Ausführungsbeispiels für eine Statorherstellvorrichtung zum Herstellen eines mit Spulen versehenen Stators einer elektrischen Maschine;
Fig. 2 eine schematische Draufsicht auf ein Statorbauteil in Form eines Kerns des Stators bei einem Einfügen von Leitern;
Fig. 3a, 3b nacheinander folgende Schritte beim Einfügen von Leiterenden, die durch Weiten und Schränken in herkömmlicher Weise umgeformt sind, in eine Spann- und Fixiervorrichtung zum Bilden von zu verschweißenden Leiterendenpaaren;
Fig. 4 eine Draufsicht auf eine Schränkseite des Statorbauteils mit zu verschweißenden Leiterendenpaaren nach dem Schränken für einen Stator einer ersten Kategorie, bei der ein Lagensprung über gesonderte Layer-Hairpins realisiert wird;
Fig. 5 eine Draufsicht auf die Schränkseite des Statorbauteils mit zu verschweißenden Leiterendenpaaren nach dem Schränken für einen Stator einer zweiten Kategorie, bei der ein Lagensprung auf einer Schränkseite realisiert wird;
Fig. 6 eine Draufsicht in axialer Richtung auf eine Radialbiegeeinrichtung der Statorherstellvorrichtung gemäß einer bevorzugten Ausführungsform;
Fig. 7a, 7b, 7c schematische Darstellungen eines Greifvorganges zum Greifen eines einzelnen Leiterendes beim Weiten mittels eines ersten Greifers der Radialbiegeeinrichtung, der eine erste und eine zweite Greifbacke aufweist;
Fig. 8 eine perspektivische Ansicht einer Greifbacke des ersten Greifers;
Fig. 9 eine perspektivische Ansicht einer Greifbacke eines zweiten Greifers der Radialbiegeeinrichtung;
Fig. 10 eine perspektivische Ansicht einer Greifbacke eines dritten Greifers der Radialbiegeeinrichtung;
Fig. 11 eine schematische Blockdarstellung zur Verdeutlichung von Beispielen für eine erste bis vierte unterschiedliche Weitsequenz zum Weiten von Leiterenden, die jeweils gemeinsam aus einer Statornut hervorstehen;
Fig. 12 eine perspektivische Ansicht einer als Schränkkrone ausgebildeten Biegeeinheit einer zum Schränken eingesetzten Umfangsbiegeeinrichtung der Statorherstellvorrichtung;
Fig. 13 das Detail XIII von Fig. 12, wobei radial innere und radial äußere Aufnahmetaschen dargestellt sind;
Fig. 14 eine axiale Draufsicht auf ein mit Aufnahmetaschen versehenes Ende einer ersten, radial weiter außen angeordneten Schränkkrone, wobei Leiterenden in eine radial innere und eine radial äußere Aufnahmetasche der ersten Schränkkrone aufgenommenen sind und eine radial weiter innen liegende zweite Schränkkrone mit gestrichelter Linie dargestellt ist;
Fig. 15 eine Darstellung der zweiten Schränkkrone in einer Ausgangsposition, wobei Leiterenden in eine radial innere und eine radial äußere Aufnahmetasche aufgenommen sind und benachbarte Schränkkronen gestrichelt angedeutet sind; und
Fig. 16 eine Darstellung wie in Fig. 15 nach einer zum Schränken durchzuführenden Relativbewegung der benachbarten Schränkkronen, um Leiterendenpaare mit geringem Abstand zueinander zu bilden.

Im Folgenden werden unter Bezug auf die beigefügten Zeichnungen bevorzugte Ausgestaltungen von Vorrichtungen und Verfahren zur Durchführung von Herstellungsschritten in einem Teilbereich der Elektromotorenfertigung, genauer dem Bereich der Statorenfertigung für Traktionsantriebe, beschrieben.

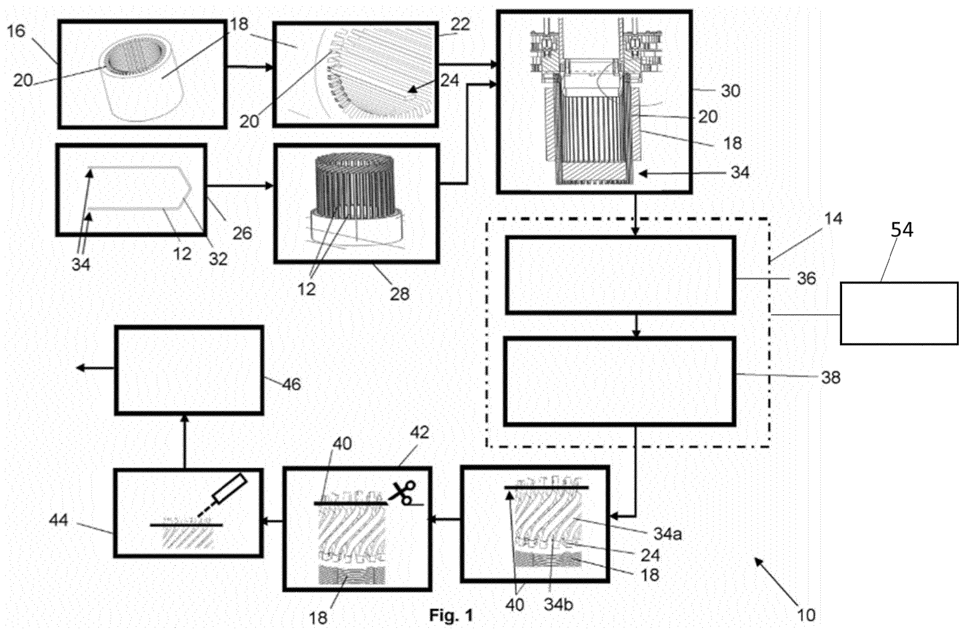

In Fig. 1 ist ein Ausführungsbeispiel für eine Statorherstellvorrichtung 10 zum Herstellen eines mit Spulen versehenen Stators 50 einer elektrischen Maschine als Blockdarstellung dargestellt, wodurch auch Herstellschritte eines entsprechenden Statorherstellverfahren zum Herstellen des Stators 50 veranschaulicht werden.

Der durch die Statorherstellvorrichtung 10 herzustellende Stator 50 soll insbesondere als Stator 50 eines Fahrmotors eines Elektrofahrzeuges, vorzugsweise im Leistungsbereich von 20 kW bis 400 kW eingesetzt werden. Hierzu soll der Stator 50 eine möglichst große Anzahl von Spulen erhalten, wobei die Spulen aus Hairpins 12 erzeugt werden.

Bei der dargestellten Ausführungsform weist die Statorherstellvorrichtung 10 eine Leiterendenumformvorrichtung 14 sowie vorzugsweise eine oder mehrere oder alle der im Folgenden näher bezeichneten zusätzlichen Stationen auf.

Vorzugsweise weist die Statorherstellvorrichtung 10 eine Blechpaketherstellvorrichtung 16 zum Herstellen des als Blechpaket ausgebildeten mit Spulen zu versehenden Statorbauteils 18 des Stators 50 auf. Die Blechpaketherstellvorrichtung 16 ist z. B. in grundsätzlich bekannter Art und Weise ausgebildet, um das Statorbauteil 18 aus einzelnen Blechlagen herzustellen, wobei das Statorbauteil 18 ringförmig ausgebildet ist und an einem Innenwandbereich mit einer Reihe von verteilt an der Innenwandung ausgebildeten Statornuten 20 versehen ist, die zur Aufnahme von Leitersegmenten dienen.

Vorzugsweise weist die Statorherstellvorrichtung 10 eine Vorrichtung 22 zum Herstellen von Nutisolierungen auf, mittels der die einzelnen Statornuten 20 mit einer Nutisolierung 24, vorzugsweise aus Isolationspapier versehen werden. Die Vorrichtung zum Herstellen von Nutisolierungen 22 ist vorzugsweise in der in der Literaturstelle [6] näher beschriebenen Art und Weise ausgeführt.

Die Statorherstellvorrichtung 10 weist weiter eine Hairpinherstellvorrichtung 26 zum Herstellen der Hairpins 12 auf. Die Hairpinherstellvorrichtung 26 kann z. B. (nicht dargestellte) Schneideinrichtungen zum Abschneiden von Drahtstücken einer Drahtspule sowie nicht näher dargestellte Biegeeinrichtungen zum Biegen einer Dachbiegung und/oder Knickbiegung und/oder 3-dimensionalen Biegung der Hairpins 12 aufweisen.

Vorzugsweise weist die Statorherstellvorrichtung 10 eine Vorpositionierungsvorrichtung 28 zum Vorpositionieren der Hairpins 12 sowie eine Hairpineinsteckvorrichtung 30 zum Einstecken der so vorpositionierten Hairpins 12 in die Statornuten 20 des Blechpakets 18 auf. Mögliche Ausführungen der Vorpositionierungsvorrichtung 28 sowie der Hairpin-Einsteckvorrichtung 30 sind näher in der Literaturstelle [7] gezeigt und beschrieben. In der Vorpositionierungsvorrichtung 28 werden insbesondere die Hairpins 12 zu Kränzen vorpositioniert.

Wie bei der Hairpinherstellvorrichtung 26 angedeutet, haben die Hairpins 12 einen gebogenen Wickelkopf 32 sowie zwei Schenkel mit freien Leiterenden 34, wobei sie bis auf den äußersten Endbereich an jedem Leiterende 34 mit einer Isolierung, beispielsweise einem Kunststoffüberzug, versehen sind. Nach dem Hairpin-Einstecken mittels der Hairpineinsteckvorrichtung 30 stehen die Leiterenden 34 an einem Ende - Schränkseite 52 - des Statorbauteils 18 aus den Statornuten 20 vor.

Die Leiterendenumformvorrichtung 14 dient zum Durchführen des Weitprozesses, wo die einzelnen Leiterenden 34 in radialer Richtung aufgeweitet werden und zum Durchführen des Schränkprozesses, wobei die so aufgeweiteten Leiterenden 34 in Umfangsrichtung umgeformt werden, um so jeweils Paare von miteinander zu verbindenden Leiterenden 34 zu bilden.

Hierzu weist die Leiterendenumformvorrichtung 14 eine Radialbiegeeinrichtung 36 und eine Umfangsbiegeeinrichtung 38 auf. Weiter weist die Leiterendenumformvorrichtung 14 eine Steuerung 54 auf. Die Steuerung 54 kann Teil einer Zentralsteuerung der Statorherstellvorrichtung 10 oder eine gesonderte dezentrale Steuerung 54 der Leiterendenumformvorrichtung 14 sein. Die Steuerung 54 ist als elektronische Steuerung ausgebildet, die einen Speicher aufweist, in dem ein entsprechendes Computerprogramm geladen ist, das Anweisungen zum Durchführen des Leiterendenumformverfahrens, wie es später noch näher erläutert wird, geladen ist.

Die Statorherstellvorrichtung 10 kann weiter eine Spann- und/oder Fixiervorrichtung 40 zum Spannen und/oder Fixieren der einzelnen zu verbindenden Paare von Leiterenden 34 aufweisen. Ein Ausführungsbeispiel der Spann- und Fixiervorrichtung 40 ist in der Literaturstelle [8] gezeigt und beschrieben.

Die Statorherstellvorrichtung 10 kann weiter eine Leiterendenschneidvorrichtung 42 zum Schneiden der mit der Spann- und/oder Fixiervorrichtung 40 verspannten und fixierten Leiterenden 34 umfassen.

Ein Ausführungsbeispiel der Statorherstellvorrichtung 10 weist weiter eine Leiterendenschweißvorrichtung 44 zum Verschweißen der zum Bilden der Spulen miteinander zu verbindenden Leiterenden 34 auf.

Weiter kann die Statorherstellvorrichtung 10 Vorrichtungen 46 zum elektrischen Kontaktieren der durch die Hairpins 12 so gebildeten Spulen und/oder zum Testen und/oder Vergießen des so gebildeten Stators 50 umfassen.

Im Folgenden werden Ausführungsbeispiele der Leiterendenumformvorrichtung 14 der Statorherstellvorrichtung 10 sowie der damit durchzuführenden Leiterendenumformverfahren näher erläutert.

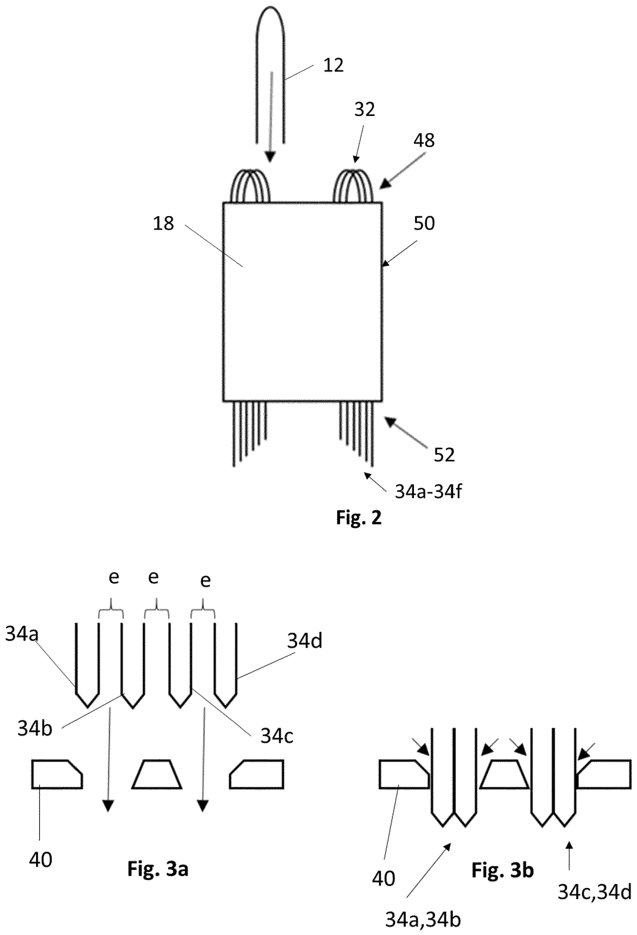

Bei der Statorherstellvorrichtung 10 gemäß dem in Fig. 1 dargestellten Ausführungsbeispiel wird zu der Herstellung eines Stators 50 als Beispiel für das Bauteil zunächst ein Blechpaket mit Statornuten 20 und darin untergebrachte Nutisolierungen 24 als Statorbauteil 18 bereitgestellt; gleichzeitig werden Leiter in Form von Hairpins 12 hergestellt. Die Leiter in Form von Hairpins 12 werden anschließend in das Statorbauteil 18 eingefügt, wie dies in Fig. 2 angedeutet ist. Fig. 2 zeigt das Statorbauteil 18 mit den bereits eingefügten oder gerade einzufügenden Hairpins 12.

Die Seite, von der die einzelnen Hairpins 12 in das Statorbauteil 18 gesteckt werden, wird als Wickelkopfseite 48 bzw. Fügeseite bezeichnet. Im Gegensatz dazu wird die der Fügeseite abgewandte Seite des Stators 50 als Schränkseite 52 bezeichnet. Diese zeichnet sich durch die hervorstehenden, abisolierten Leiterenden 34 der Hairpins 12 aus. Zur Erzeugung eines geschlossenen Stromkreises werden die Leiterenden 34a-34f auf definierte Weise miteinander verbunden.

Generell gibt es bei derzeitigen Hairpinstatorherstellverfahren mehrere Möglichkeiten, wie diese Leiterendenpaarungen und damit ein geschlossener Stromkreis erzeugt werden können. Zum einen besteht die Möglichkeit, die Leiterenden 34a-34f einzeln radial auf einen bestimmten Durchmesser zu bringen. Der minimale Abstand e der Leiterenden 34a-34f zueinander wird durch die Wandstärke der Schränkwerkzeuge definiert. Wie Fig. 3a und 3b zeigen, werden nach erfolgtem Schränkprozess die einzelnen Leiterenden 34a-34d durch die Spann- und Fixiereinrichtung 40 aufeinander zu bewegt und anschließend verschweißt. Der Abstand e zwischen den Leiterenden 34a-34d sowie die Positionstoleranzen der Einzelleiter müssen dabei vom nachfolgenden Prozess kompensiert werden. Bei einem begrenzten Bauraum können die einzelnen Bereiche, auf denen die Leiterenden 34a-34d zuverlässig zueinander geführt werden können, nicht beliebig groß gestaltet werden. Der auftretende Versatz mindert somit maßgeblich die Prozessstabilität des drauf folgenden Schweißprozesses. Die Fig. 3a und 3b zeigen aufeinanderfolgende Schritte beim Einfügen von zwei zu verschweißenden Leiterendenpaaren 34a, 34b und 34c, 34d in die Spann- und Fixiervorrichtung 40 nach einem herkömmlichen Leiterendenumformverfahren. Zwischen jeweils benachbarten Leiterenden 34a-34d besteht ein Abstand e, wobei der Abstand e bei zu verschweißenden Paaren durch die Spann- und Fixiervorrichtung 40 verringert werden muss. Dies kann in ungünstigen Fällen zu Prozessunstabilitäten führen.

Eine Möglichkeit, den Abstand e zu verringern, liegt darin, zumindest einige der Leiterenden 34a-34f bereits "paarweise" zu weiten. Dabei werden Leiterenden 34a, 34b schon beim dem Schränken vorausgehenden Weitprozess paarweise radial aufgeweitet. Der danach folgende Schränkprozess zeichnet sich durch einen wesentlich geringeren Abstand zwischen den Leiterenden eines Paares und damit einhergehend einer erhöhten Prozessstabilität aus. Auch in der Literaturstelle [3] ist bereits ein paarweises Weiten vorgeschlagen worden, wobei aber lediglich "regelmäßige" Verschaltungen ohne Lagensprung auf der Schränkseite betrachtet wurden. Als "Lage" werden alle Leiterenden auf einem gemeinsamen Durchmesser bezeichnet. Am Stator 50 selbst kann zwischen zwei unterschiedlichen Seiten, der Schränkseite 52 sowie der Wickelkopfseite 48, unterschieden werden.

Zur Erzeugung des geschlossenen Stromkreises werden die Leiterenden 34, 34a-34h auf der Schränkseite 52 auf definierte Weise miteinander verbunden. In der Regel werden die Schenkel des Hairpins 12 so gebogen, dass sie in zwei verschiedenen, benachbarten Lagen bzw. Durchmessern zum Liegen kommen. So befindet sich z.B. der erste Schenkel - Leiterende 34a - eines ersten Hairpins in der äußersten Lage, wohingegen sein zweiter Schenkel - Leiterende 34b - um ein paar Nuten versetzt in die zweite Position von außen gefügt wird. Durch die unterschiedlichen Stellungen und die damit einhergehende Paarbildung benachbarter Leiterenden 34 kommt es zur Bildung von geschlossenen Stromkreisen.

In Abhängigkeit der verwendeten Hairpingeometrien - insbesondere den Geometrien der Wickelköpfe 32 auf der Wickelkopfseite 48 - sowie der gebildeten Pärchen auf der Schränkseite 52 lassen sich die Statoren 50 in zwei unterschiedliche Kategorien unterteilen.

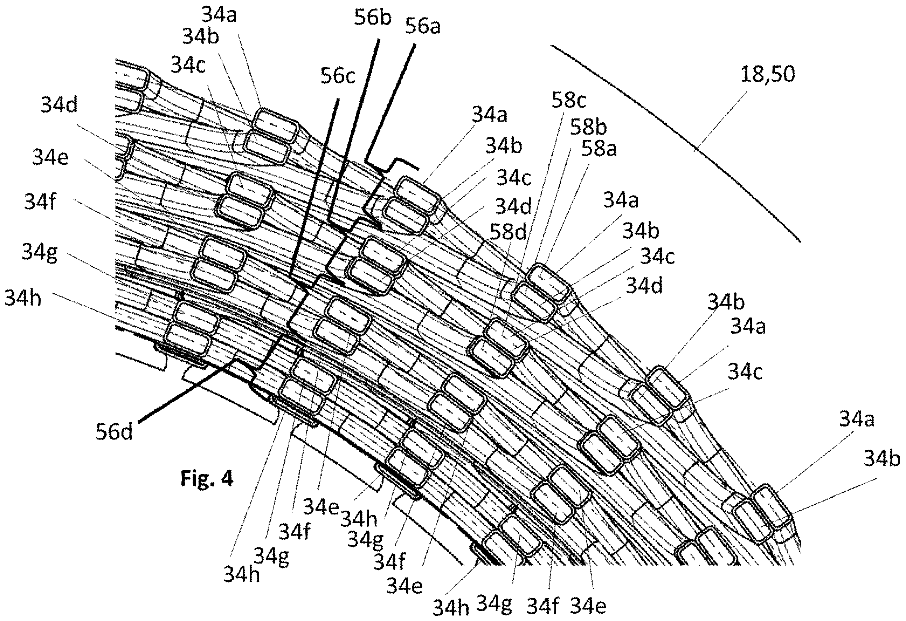

Bei der ersten Kategorie von Statoren, von der ein Beispiel in Fig. 4 gezeigt ist, wird der Lagensprung über sogenannte "Layerpins" realisiert. Das sind besondere Hairpins 12 ("Sonderpins"), die eine Verbindung zwischen zwei Kränzen 56a-56d, z.B. zwischen einem ersten Kranz 56a und einem zweiten Kranz 56b, herstellen. Als "Kranz" werden zwei zusammengehörende, benachbarte Lagen bezeichnet. Der Kranz 56a-56d ist insbesondere eine kranzförmige Anordnung von Hairpins 12, von denen jeweils der erste Schenkel auf der einen der benachbarten Lagen und der andere auf der anderen der benachbarten Lagen liegt. Ein Beispiel dafür bilden eine primäre Lage 58a und eine sekundäre Lage 58b, die zusammen den ersten Kranz 56a darstellen, wohingegen eine tertiäre Lage 58c und eine quartäre Lage 58d den zweiten Kranz 56b bilden. Dadurch beschränkt sich die Pärchenbildung auf der Schränkseite lediglich zwischen Hairpins 12 eines Kranzes 56a oder 56b, wie z.B. zwischen der primären und sekundären Lage 58a und 58b und zwischen der tertiären und quartären Lage 58c und 58d, usw. Bedingt durch die Verschaltung über spezielle Sonderpins mit besonderen Hairpingeometrien erhöht sich die Anzahl der verschiedenen Hairpinarten und damit die Komplexität des Biegens der einzelnen Wickelköpfe 32. Das entstehende, regelmäßige Muster ohne direkte Verbindung zwischen den Kränzen auf der Schränkseite zeichnet sich dadurch aus, dass sich alle Leiterenden 34a-34h einer Lage auf dem gleichen Durchmesser befinden, wie dies in Fig. 4 dargestellt ist. Insgesamt sind bei dem Beispiel des Stators mit acht Leitersegmenten pro Statornut vier Kränze 56a-56d gebildet, deren Leiterenden auf acht regulären radialen Lagen 58a-58h liegen.

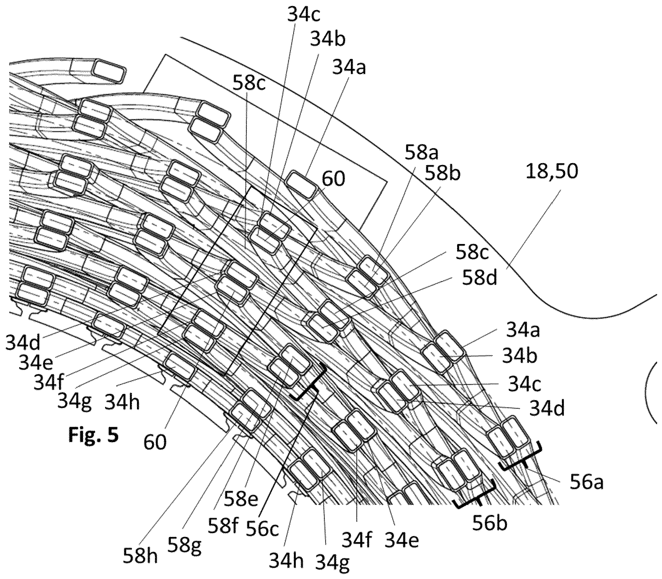

Im Gegensatz dazu ist in Fig. 5 ein Beispiel für einen Stator 50 der zweiten Kategorie dargestellt, bei dem der Lagensprung auf der Schränkseite 52 realisiert wird. Hairpin-Statoren 50 der zweiten Kategorie lassen sich im Vergleich zu Statoren der ersten Kategorie in der Regel aus einer geringeren Anzahl an verschiedenen Hairpins 12 aufbauen. Durch die geringere Anzahl unterschiedlicher Hairpintypen verringert sich der Aufwand, unterschiedliche Wickelköpfe 32 vorsehen zu müssen.

Wie in Fig. 5 dargestellt, werden manche Leiterenden 34b-34g der Hairpins 12 so gebogen, dass sie ihre eigentliche Lage 58a-58h verlassen und auf wenigstens einer Zwischenposition 60 zwischen zwei Kränzen 56a-56d zu liegen kommen. Die wenigstens eine Zwischenposition 60 liegt jeweils zwischen benachbarten Lagen, wie z.B. zwischen den Lagen 58b und 58c der Kränze 56a und 56b.

Durch die auf der Schränkseite 52 erfolgende Kontaktierung zweier solcher Leiterenden 34b-34g, von denen sich wenigstens eines auf einer Zwischenposition 60 befindet, kann eine elektrische Verbindung zwischen den unterschiedlichen Kränzen 56a-56d des Stators 50 geschaffen werden. Im Gegensatz zu den zuvor beschriebenen Statoren der ersten Kategorie kommen diese Statoren 50 der zweiten Kategorie ohne (oder zumindest mit einer geringeren Anzahl von) Layerpins aus.

Wie man durch einen Vergleich der in Fig. 5 eingerahmt hervorgehobenen Leiterenden 34b-34g mit den in Umfangsrichtung rechts daneben angeordneten Leiterenden 34a-34h, die sich auf den regulären Lagen 58a-58h befinden, sehen kann, können alle der für einen Lagensprung verbundenen Leiterenden 34b-34g auf gegenüber den regulären Lagen 58a-58h leicht versetzt angeordneten Zwischenpositionen 60 liegen.

Bei einigen Ausgestaltungen weicht der Durchmesser (d.h. die radiale Position) der Leiterendenpaare 34b, 34c auf der Zwischenposition 60 von dem der einzelnen Lagen 58a-58h ab. Bei bevorzugten Ausgestaltungen liegt der Durchmesser der Zwischenposition 60 - vorzugsweise mittig -zwischen den Durchmessern der zwei beteiligten benachbarten Lagen 58b, 58c.

Die Vereinfachung des Wickelkopfes 32 aufgrund der reduzierten Anzahl an unterschiedlichen Hairpingeometrien wird hierbei durch die komplexere Schränkseite 52 kompensiert. Die Spreizung der Leiterenden 34b-34g einer Lage 58b-58g auf zwei verschiedene Durchmesser trug bisher wesentlich zu einer Verminderung der Prozessstabilität bei, da mit den bisherigen Schränkwerkzeugen nur eine Stellung realisiert werden konnte. Somit musste bei Verwendung bisher bekannter Leiterendenumformvorrichtungen die Verschiebung der Leiterenden 34 auf den jeweiligen Durchmesser auf den nachgelagerten Prozess entfallen. Für beschriebene Statoren 50 der zweiten Kategorie sind aktuell keine technischen Lösungen zur Steigerung der Positioniergenauigkeit und damit einhergehend eine Erhöhung der Prozessstabilität bekannt. Fig. 5 zeigt ein exemplarisches Wickelschema mit Lagensprung auf der Schränkseite 52 und den daraus resultierenden Zwischenpositionen 60.

Im Folgenden werden ein Leiterendenumformverfahren und eine Leiterendenumformvorrichtung 14 beschrieben, mit denen für die Statoren 50 der zweiten Kategorie, deren Lagesprung durch eine Kontaktierung der Leiterenden 34b-34g auf Zwischenpositionen 60 realisiert wird, ein flexibles Fertigungsverfahren durchführbar ist. Insbesondere sollen das Weiten und Schränken für die Leiterenden 34a-34h zur Herstellung solcher Statoren 50 mit Lagesprung durch Kontaktierung auf der Schränkseite 52 - bei denen ein individuelles Wickelschema vorgegeben ist, prozesssicher durchführbar sein. Vorzugsweise soll auch für komplexe Schränkvariationen ein zuverlässiger und positionsgetreuer Weit- und Schränkprozess etabliert werden, welcher maßgeblich zu einer Steigerung der Prozessstabilität nachfolgender Abläufe beiträgt.

Vorteilhaft wird durch eine Kombination verschiedener Weitwerkzeuge 61-1, 61-2, 61-3, wie z.B. erste Weitwerkzeuge 62-1 für einzelne Leiterenden, zweite Weitwerkzeuge 61-2 für Leiterendenpärchen sowie gegebenenfalls dritte Weitwerkzeuge 61-3 in Form von Kombiweitwerkzeugen in kombinierter Form für einzelne Leiterenden und für Leiterendenpärchen, ein flexibler Fertigungsprozess erhalten. Dementsprechend sind bei bevorzugten Ausführungsformen des Leiterendenumformverfahrens sowie der Leiterendenumformvorrichtung 14 auch die Schränkwerkzeuge an die gegebenen Randbedingungen angepasst und optimiert. Die Durchführung und Steuerung erfolgt so, dass die finalen Stellungen der Leiterenden 34a-34h des Stators 50 möglichst genau durch die Weit- und Schränkprozesse abgebildet werden. Herausforderungen ergeben sich aufgrund der großen Variantenvielfalt der geometrischen Gestaltung sowie der elektrischen Verschaltung des Stators 50 bei unterschiedlichen Statorproduktreihen. Bevorzugte Ausgestaltungen der verwendeten Werkzeuge und Prozessabläufe lassen sich dementsprechend flexibel an das vorhandene Werkstück adaptieren, unter der Prämisse einer verbesserten Prozessstabilität sowie einer relativ zu bisherigen Leiterendenumformverfahren gesehen zumindest neutralen Taktzeit.

Im Folgenden werden anhand der beigefügten Figuren bevorzugte Ausgestaltungen des Leiterendenumformverfahrens und der Leiterendenumformvorrichtung 14 näher erläutert. Das Leiterendenumformverfahren ist mittels der Leiterendenumformvorrichtung 14 durchführbar. Die Leiterendenumformvorrichtung 14 ist zum Durchführen des Leiterendenumformverfahrens ausgebildet.

Das Leiterendenumformverfahren dient zum Umformen von Leiterenden 34a-34h, die aus der sich ringförmig um eine Mittelachse erstreckenden Anordnung von Statornuten 20 des Statorbauteils 18 vorstehen.

Das Leiterendenumformverfahren umfasst den Schritt:
a) Weiten der Leiterenden 34a-34h durch Biegen der Leiterenden 34a-34h in radialer Richtung mittels mehrerer Weitwerkzeuge 61-1, 61-2, 61-3 wie z.B. Greifer 62-1, 62-2, 62-3, der Radialbiegeeinrichtung 36, so dass durch das Weiten ein erster Teil der Leiterenden 34b auf einer ersten radialen Lage 58b liegt und ein zweiter Teil der Leiterenden 34c auf einer zweiten radialen Lage 58c liegt.

Dabei umfasst Schritt a) den Schritt:
a1) Erfassen wenigstens eines einzelnen Leiterendes durch wenigstens ein erstes Weitwerkzeug 61-1 wie z.B. einen ersten Greifer 62-1, um das so erfasste wenigstens eine einzelne Leiterende einzeln in radialer Richtung zu biegen, und gemeinsames Erfassen wenigstens eines Paars radial benachbarter Leiterenden 34e, 34f durch wenigstens ein zweites Weitwerkzeug 61-2 wie z.B. einen zweiten Greifer 62-2, um das Paar radial benachbarter Leiterenden gemeinsam in radialer Richtung zu biegen, wobei Schritt a1) derart durchgeführt wird, dass ein dritter Teil der Leiterenden 34e auf wenigstens einer radialen Zwischenposition 60 zwischen der ersten und zweiten radialen Lage 58b, 58c liegt.

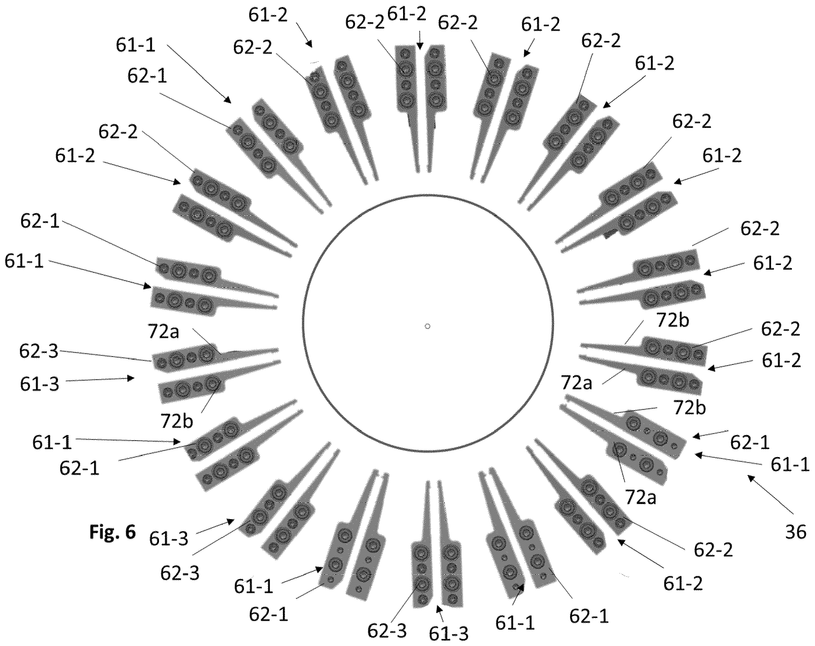

Wie man Fig. 5 entnehmen kann liegen die radial weiter innen liegenden Leiterenden 34b des radial äußersten ersten Kranzes 56a auf der "regulären" radialen sekundären Lage 58b (zweite Lage von außen gesehen), während die radial äußeren Leiterenden 34c des von radial außen gesehen zweiten Kranzes 56b auf der regulären radialen tertiären Lage 58c (dritte Lage von außen gesehen) liegen. Durch Nutzung unterschiedlicher Weitwerkzeuge 61-1, 61-2, 61-3 wie z.B. Greifer 62-1, 62-2, 62-3 oder andere z.B. aus den vorgenannten Literaturstellen [9] bis [11] vom Prinzip her bekannten und entsprechend zum flexiblen Erfassen angepassten Weitwerkzeugen lassen sich Weitvorgänge flexibler durchführen. Das Weiten erfolgt derart, dass einige der Leiterenden 34c (siehe z.B. das Leiterende 34c in der Einrahmung in Fig. 5 sowie das gegen den Uhrzeigersinn benachbarte entsprechende Leiterende) auf der Zwischenposition 60 liegen, wie dies ebenfalls Fig. 5 entnehmbar ist. Eine bevorzugte Radialbiegeeinrichtung 36 mit Greifern 62-1, 62-2, 62-3 als Weitwerkzeuge 61-1, 61-2, 61-3 wird hiernach noch näher anhand der Fig. 6 bis 11 erläutert.

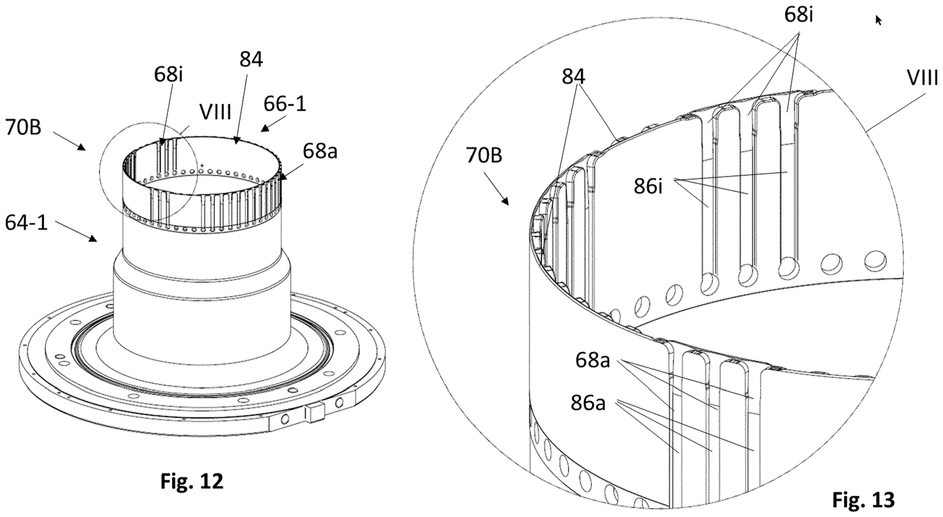

Weiter umfasst das Leiterendenumformverfahren den Schritt:
b) Schränken der Leiterenden 34a-34h durch Biegen in Umfangsrichtung mittels der Umfangsbiegeeinrichtung 38, die eine in einer ersten Drehrichtung drehbare erste Biegeeinheit 64-1 mit einer ersten ringförmigen Anordnung 66-1 von Aufnahmetaschen 68 und eine konzentrisch hierzu angeordnete in der zweiten Drehrichtung drehbare zweite Biegeeinheit 64-2 mit einer zweiten ringförmigen Anordnung 66-2 von Aufnahmetaschen 68 aufweist. Die Biegeeinheiten 64-1, 64-2 weisen insbesondere Schränkkronen 70A-70H zum Bilden der ringförmigen Anordnungen 66-1, 66-2,... auf. Ausführungsbeispiele für diese Biegeeinheiten 64-1, 64-2 mit Schränkkronen 70A-70H werden hiernach noch anhand der Fig. 12 bis 16 näher erläutert.

Dabei umfasst Schritt b) den Schritt:
b0) Bereitstellen der ersten und zweiten Biegeeinheit 64-1, 64-2 derart, dass diejenige Biegeeinheit, die radial weiter außen liegt, radial innere Aufnahmetaschen 68i aufweist, die zur radial inneren Seite hin offen sind, und diejenige Biegeeinheit, die radial weiter innen liegt, radial äußere Aufnahmetaschen 68a aufweist, die zur radial äußeren Seite offen sind, wobei
b0-1) ein Teil der Aufnahmetaschen 68a, 68i der ersten Anordnung auf der ersten radialen Lage 58b liegt und ein anderer Teil der Aufnahmetaschen 68a, 68i der ersten Anordnung 66-1 radial versetzt hierzu auf der wenigstens einen radialen Zwischenposition 60 liegt und/oder
b0-2) ein Teil der Aufnahmetaschen 68a, 68i der zweiten Anordnung 66-2 auf der zweiten radialen Lage 58c liegt und ein anderer Teil der Aufnahmetaschen 68a, 68i der zweiten Anordnung 66-2 radial versetzt hierzu auf der wenigstens einen radialen Zwischenposition 60 oder einer weiteren von mehreren radialen Zwischenpositionen 60 liegt.

Weiter umfasst Schritt b) den Schritt:
b1) Einführen des in Schritt a) auf die erste radiale Lage 58b geweiteten ersten Teils der Leiterenden in die erste Anordnung 66-1 von Aufnahmetaschen 68a, 68i und Einführen des in Schritt a) auf die zweite radiale Lage 58c geweiteten zweiten Teils von Leiterenden in die zweite Anordnung 66-2 von Aufnahmetaschen.

Dieser Schritt b1) umfasst:
b1a) Einfügen von auf die wenigstens eine radiale Zwischenposition 60 geweiteten Leiterenden in Aufnahmetaschen 68a, 68i des anderen Teils der ersten oder zweiten Anordnung 66-1, 66-2 und Einfügen jeweils eines radial innen liegenden Leiterendes jedes Paars in Schritt a1) gemeinsam gebogener Leiterenden in eine der radial äußeren Aufnahmetaschen 68a und des radial außen liegenden Leiterendes des Paars in eine der radial inneren Aufnahmetaschen 68i.

Schließlich umfasst Schritt b):
b2) gegensätzliches Drehen der ersten und der zweiten Biegeeinheit 64-1, 64-2, um den ersten Teil Leiterenden und den zweiten Teil Leiterenden in gegensätzliche Umfangsrichtungen zu biegen.

Die Leiterendenumformvorrichtung 14 ist dementsprechend zum Umformen von Leiterenden 34a-34h, die aus der sich ringförmig um eine Mittelachse erstreckenden Anordnung von Statornuten 20 des Statorbauteils 18 zum Bilden eines Stators 50 einer elektrischen Maschine in axialer Richtung vorstehen, ausgebildet. Die Leiterendenumformvorrichtung 14 umfasst die Radialbiegeeinrichtung 34 zum Weiten der Leiterenden 34a-34h mit mehreren Weitwerkzeugen 61-1, 61-2, 61-3 wie beispielsweise Greifern 62-1, 62-2, 62-3, die zum Biegen der Leiterenden 34a-34h in radialer Richtung derart ausgebildet sind, dass nach dem Biegen ein erster Teil der Leiterenden auf einer ersten radialen Lage 58b liegt und ein zweiter Teil der Leiterenden auf einer zweiten radialen Lage 58c liegt. Weiter umfasst die Leiterendenumformvorrichtung 14 die Umfangsbiegeeinrichtung 36 zum Schränken der Leiterenden 34a-34f durch Biegen in Umfangsrichtung, wobei die Umfangsbiegeeinrichtung 36 die in einer ersten Drehrichtung drehbare erste Biegeeinheit 64-1 mit der ersten ringförmigen Anordnung 66-1 von Aufnahmetaschen 68a, 68i und die konzentrisch hierzu angeordnete in der zweiten Drehrichtung drehbare zweite Biegeeinheit 66-2 mit der zweiten ringförmigen Anordnung 66-2 von Aufnahmetaschen 68a, 68i aufweist. Von der ersten und zweiten Biegeeinrichtung 64-1, 64-2 weist diejenige Biegeeinheit, die radial weiter außen liegt, radial innere Aufnahmetaschen 68i auf, die zur radial inneren Seite hin offen sind. Diejenige Biegeeinheit, die radial weiter innen liegt, weist radial äußere Aufnahmetaschen 68a auf, die zur radial äußeren Seite offen sind. Dabei liegt ein Teil der Aufnahmetaschen 68a, 68i der ersten Anordnung auf der ersten radialen Lage 58b und ein anderer Teil der Aufnahmetaschen 68a, 68i der ersten Anordnung 66-1 liegt radial versetzt hierzu auf der wenigstens einen radialen Zwischenposition 60. Alternativ oder zusätzlich liegt ein Teil der Aufnahmetaschen 68a, 68i der zweiten Anordnung 66-2 auf der zweiten radialen Lage 58c und ein anderer Teil der Aufnahmetaschen 68a, 68i der zweiten Anordnung 66-2 liegt radial versetzt hierzu auf der wenigstens einen radialen Zwischenposition 60 oder einer weiteren von mehreren Zwischenpositionen 60. Weiter umfasst die Leiterendenumformvorrichtung 14 die Steuerung 54, die dazu ausgebildet ist, die Leiterendenumformvorrichtung 14 anzusteuern zum
a) Weiten der Leiterenden 34a-34h durch Biegen der Leiterenden 34a-34h in radialer Richtung mittels der mehreren Weitwerkzeuge 61-1, 61-2, 61-3, wie z.B. Greifer 62-1, 62-2, 62-3, der Radialbiegeeinrichtung 36, so dass durch das Weiten ein erster Teil der Leiterenden 38a-38h auf der ersten radialen Lage 58b liegt und ein zweiter Teil der Leiterenden 38a-38h auf der zweiten radialen Lage 58c liegt, durch
a1) Erfassen wenigstens eines einzelnen Leiterendes durch den wenigstens ein erstes Weitwerkzeug 61-1 wie z.B. einen ersten Greifer 62-1, um das so erfasste Leiterende einzeln in radialer Richtung zu biegen, und gemeinsames Erfassen wenigstens eines Paars radial benachbarter Leiterenden durch wenigstens ein zweites Weitwerkzeug 61-2, wie z.B. einen zweiten Greifer 62-2, um das Paar radial benachbarter Leiterenden gemeinsam in radialer Richtung zu biegen, wobei die Steuerung 54 eingerichtet ist, ein Ansteuern der Greifer 62-1, 62-2, 62-3 so durchzuführen, dass ein dritter Teil der Leiterenden 38a-38f auf der wenigstens einen radialen Zwischenposition 60 zwischen der ersten und zweiten radialen Lage 58b, 58c liegt,
b) Schränken der Leiterenden 34a-34f durch Biegen in Umfangsrichtung mittels der Umfangsbiegeeinrichtung 38 durch
b1) Einführen des in Schritt a) auf die erste radiale Lage 58b geweiteten ersten Teils der Leiterenden 38a-38f in die erste Anordnung 66-1 von Aufnahmetaschen 68a, 68i, Einführen des in Schritt a) auf die zweite radiale Lage 58c geweiteten zweiten Teils von Leiterenden 38a-38f in die zweite Anordnung von Aufnahmetaschen 68a, 68i, unter
b1a) Einfügen von auf die wenigstens eine radiale Zwischenposition 60 geweiteten Leiterenden in je eine Aufnahmetasche 68a, 68i des anderen Teils der ersten oder zweiten Anordnung 66-1, 66-2 und Einfügen jeweils eines radial innen liegenden Leiterendes jedes Paars in Schritt a1) gemeinsam gebogener Leiterenden in eine der radial äußeren Aufnahmetaschen 68a und des radial außen liegenden Leiterendes des Paars in eine der radial inneren Aufnahmetaschen 68i, und
b2) gegensätzliches Drehen der ersten und zweiten Biegeeinheiten 64-1, 64-2, um den ersten Teil Leiterenden und den zweiten Teil Leiterenden in gegensätzliche Umfangsrichtungen zu biegen.

Demnach ist die Steuerung 54 dazu ausgebildet, die Leiterendenumformvorrichtung 14 zum Durchführen der Schritte des Leiterendenumformverfahrens anzusteuern. Insbesondere ist in die Steuerung 54 ein Computerprogramm mit Anweisungen geladen, die die Leiterendenumformvorrichtung 14 zum Durchführen des Leiterendenumformverfahrens veranlassen.

Bei dem Leiterendenumformverfahren und der Leiterendenumformvorrichtung 14 werden somit Leiterenden 34b-34g, die auf radialen Zwischenpositionen 60 anzuordnen sind, um z.B. zwei Kränze 56a/56b, 56b/56c, 56c/56d auf der Schränkseite 52 zu verschalten, bereits beim Weiten auf entsprechende radiale Zwischenpositionen 60 gebracht. Hierzu werden einige Leiterenden einzeln und einige Leiterenden paarweise geweitet. Wenigstens eine der Biegeeinheiten 64-1, 64-2 weist eine Anordnung 66-1, 66-2 von Aufnahmenuten 68a, 68i mit radial inneren und radial äußeren Aufnahmenuten auf, um auch Aufnahmenuten 68a, 68i auf der radialen Zwischenposition 60 bereitzustellen. Ein Teil dieser Aufnahmenuten 68a, 68i dient zum Aufnehmen der Leiterenden 34a-34h auf den regulären Lagen 58a-58h, insbesondere der Leiterenden 34a-34h der Kränze 56a-56d; ein anderer Teil dieser Aufnahmenuten 68a, 68i dient zum Aufnehmen der auf die wenigstens eine Zwischenposition 60 geweiteten Leiterenden 34b-34g, wie z.B. der für einen Lagensprung zu verbindenden Leiterenden.

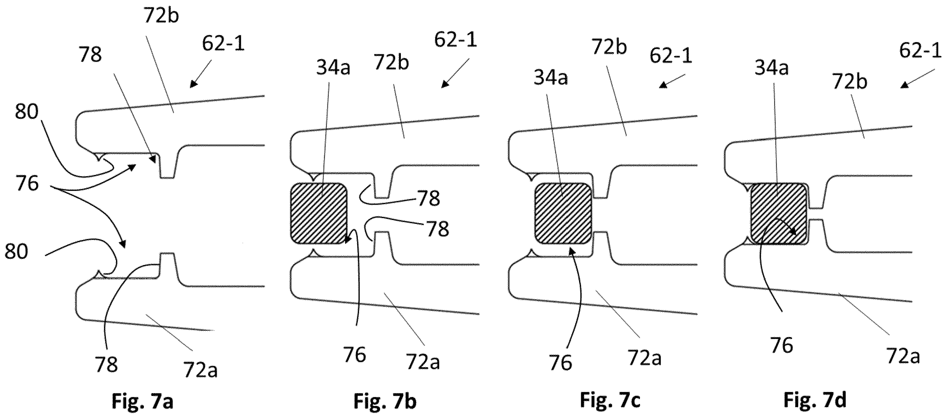

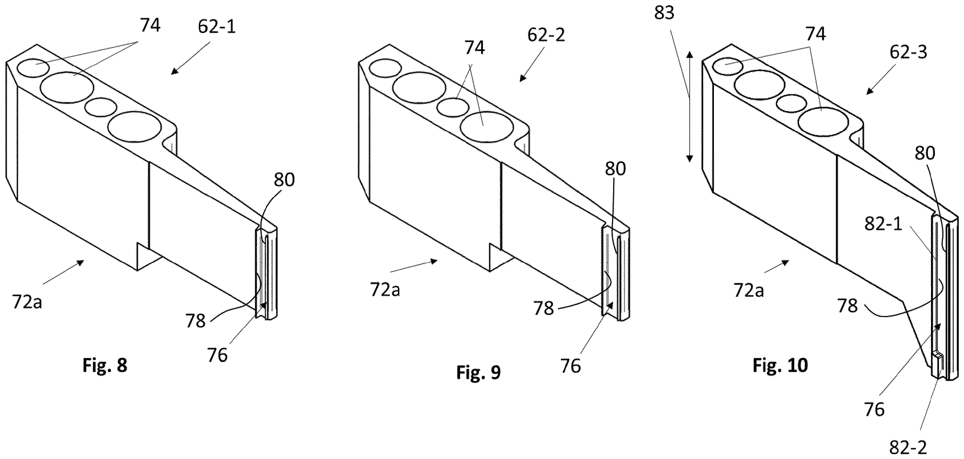

Im Folgenden wird anhand der Darstellung der Fig. 6 bis 11 eine Ausführungsform der Radialbiegeeinrichtung 36 zum Weiten der Leiterenden 34a-34h näher erläutert. Grundsätzlich kann die Radialbiegeeinrichtung 36 gemäß bevorzugten Ausgestaltungen wie in den Literaturstellen [1] und [2] beschrieben und gezeigt aufgebaut sein, wobei aber anstelle von gleichen Greifern mehrere unterschiedliche Greifer 62-1, 62-2, 62-3 vorgesehen sind, wie dies in Fig. 6 dargestellt ist. Jeder der Greifer 62-1, 62-2, 62-3 weist eine erste und eine zweite Greifbacke 72a, 72b auf, die, gesteuert durch die Steuerung 54, zum Greifen von Leiterenden 34a-34h aufeinander zu und zum Freigeben von Leiterenden 34a-34h voneinander weg bewegbar sind, wie dies in den Fig. 7a bis 7b am Beispiel des ersten Greifers 62-1, der zum Greifen eines einzelnen Leiterendes 34a ausgebildet ist, dargestellt ist. Fig. 8 zeigt die erste Greifbacke 72a des ersten Greifers 62-1, Fig. 9 zeigt die erste Greifbacke 72a des zweiten Greifers 62-2 und Fig. 10 zeigt die erste Greifbacke 72b des dritten Greifers. Die jeweilige zweite Greifbacke 72b ist spiegelbildlich zu der ersten Greifbacke 72a ausgebildet und daher in den Fig. 8 bis 10 nicht gezeigt.

Neben Anbindungsbohrungen 74 zur Befestigung verfügt die jeweilige Greifbacke 72a, 72b jedes Greifers 62-1, 66-2, 66-3 über einen definierten Greifbereich 76, der von zwei auskragenden Schultern 78, 80 begrenzt wird. Während die hintere Schulter 78 zum Fixieren des Leiterendes 34a-h dient, wird die vordere Schulter 80 zum Biegen des Leiterendes 34a-h verwendet, siehe Fig. 7a-7c. Mit Hilfe der Schultern 78, 80 können ein oder mehrere Leiterenden 34a-34h formschlüssig gegriffen und verformt werden. Der Abstand der Schultern 78, 80 zueinander wird dabei von der Anzahl der gegriffenen Leiterenden 34a-34h definiert.

In Fig. 7a-7c ist ein exemplarischer Greifvorgang für einen Einzelpin - einzelnes Leiterende 34a-34h - dargestellt. Da die der Mittelachse der Radialbiegeeinrichtung 36 abgewandte Schulter 80 des Greifers 62-1, 62-2, 62-3 immer vor dem zu greifenden Leiterende 34a-34h in den Nutbereich eingreifen muss, muss zwischen jedem Leiterende 34a-34h in der jeweiligen Statornut 20 ein minimaler Weitabstand vorgesehen werden. Dieser Weitabstand überträgt sich letztendlich auch in die Gestaltung der Schränkwerkzeuge, deren Aufnahmenuten 86a, 86i einen definierten Abstand zueinander benötigen.

Um die Leiterenden 34a-34h besser zueinander zu positionieren, können sie auch paarweise gegriffen und geweitet werden. Dazu kommen als zweite Greifer 62-2 Greifer mit einem größeren Greifbereich 76, sogenannte "Doppelgreifer", zum Einsatz. Deren Greifbereich 76 ist so ausgelegt, dass zwei oder mehr Leiterenden 34a-34h zur selben Zeit gegriffen werden können, siehe Fig. 9. Somit ist kein Weitabstand zwischen den Leiterenden 34a-34h eines Leiterendenpaares vorhanden.

Jedoch werden nicht alle Leiterenden 34a-34h direkt beim Weitvorgang als Paar geweitet. So kann es auch vorkommen, dass die Pärchenbildung erst durch den anschließenden Schränkprozess, bei dem zwei benachbarte Lagen 58a/58b, 58b/58c, 58c/58d, 58d/58e, 58e/58f, 58f/58g, 58g/58h gegeneinander rotiert werden, vollzogen wird. Ein Beispiel für das Einzelgreifen kann dem Ablaufschema der Fig. 7a-7c entnommen werden. Für diesen Zweck kommen als erste Greifer 62-1 Einzelgreifer zum Einsatz. Deren Greifbereich 76 bietet lediglich für ein einzelnes Leiterende 34a-34h ausreichend Platz, siehe Fig. 7a-7c und Fig. 8.

Zudem kann es vorkommen, dass einige der aus einer Statornut 20 vorstehenden Leiterenden 34a-34h als Pärchen und andere dieser aus derselben Statornut 20 vorstehenden Leiterenden 34a-34h einzeln gegriffen und radial aufgeweitet werden müssen. Für diesen Zweck werden als dritte Greifer 62-3 Kombigreifer verwendet, deren Greifbereich 76, vorzugsweise axial, in wenigstens zwei Greifabschnitte 82-1, 82-2 aufgeteilt ist, siehe Fig. 10. Im in der Fig. 10 oben dargestellten ersten Greifabschnitt 82-1 können, wie auch bei den Doppelgreifern, zwei Leiter gleichzeitig fixiert und geweitet werden. Deren Leiterenden ragen in den dritten Greifer 62-3 hinein, jedoch nicht bis in den zweiten, abgesetzten Greifabschnitt 82-2. Hier verengt sich die Greifkontur, sodass lediglich ein Leiterende darin Platz findet. In Abhängigkeit der Eintauchtiefe, die wie in Fig. 10 durch den Doppelpfeil 83 angedeutet durch die Steuerung 54 einstellbar ist, sowie der radialen Stellung des dritten Greifers 62-3 kann somit gewährleistet werden, ob ein oder zwei Leiterenden 34a-34h zur selben Zeit geweitet werden.

Die Verwendung von Einzel-, Doppel- oder Kombigreifern - erste bis dritte Greifer 62-1, 66-2, 66-3 - ist von der Gestaltung der Schränkseite 52 abhängig und kann für jeden (Typ von) Stator 50 variieren. Alle Greiferarten 62-1, 62-2, 62-3 können gemischt über den Umfang verteilt verwendet werden.

Bei anderen hier nicht näher dargestellten Ausgestaltungen der Radialbiegeeinrichtung 36 werden anstelle von Greifern entsprechend modifizierte andere Weitwerkzeuge 61-1, 61-2, 61-3 verwendet. Auch Kombinationen unterschiedlicher Weitwerkzeugarten sind möglich.

In der nachfolgenden Tabelle 1 ist ein exemplarischer Aufbau einer Verschaltung eines Stators 50 nach dem Weiten (oberer Teil der Tabelle) sowie nach dem Schränken (unterer Teil der Tabelle) dargestellt. Das Endergebnis des Weitvorganges bildet dabei die Basis für den nachfolgenden Schränkprozess. Dessen Endstellung kann durch die Verschiebung der Leiterenden 34a-34h einer Lage 58a-58h um einen definierten Winkel im oder gegen den Uhrzeigersinn hergeleitet werden. Als Schränkwinkel wird dabei meist ein Vielfaches des Abstandes zweier Statornuten 20 gewählt.

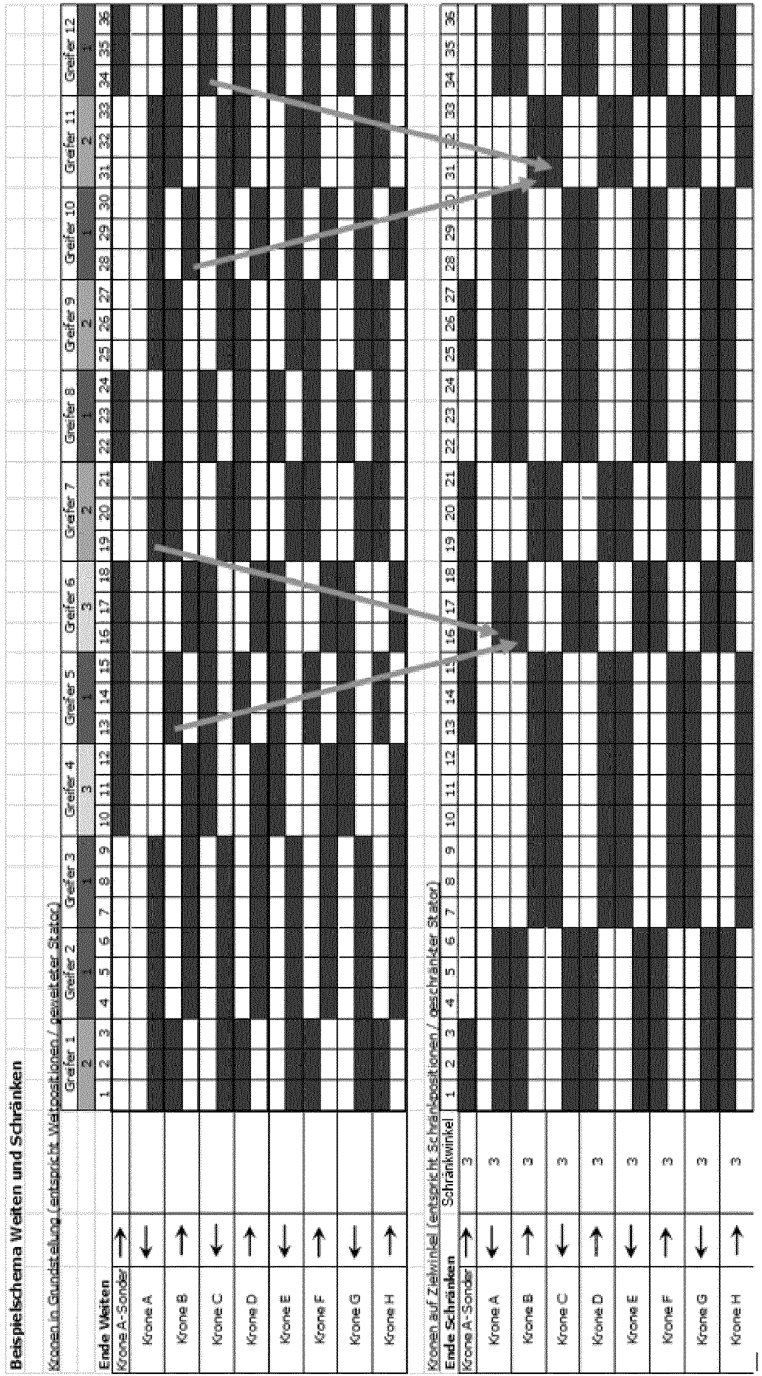

In dem oberen Teil der Tabelle sind die exemplarischen Leiterendenstellungen der ersten bis 36. Statornut 20 (dargestellt als Zahlen 1-36 in der dritten Zeile) nach dem Weiten dargestellt. Es sind zwölf Greifer vorgesehen, die jeweils zum Weiten der Leiterenden 34a-34h von drei benachbarten Statornuten 20 dienen. In der ersten Zeile ist der Greifer 1 bis 12 angegeben, in der zweiten Zeile deren Typ (1 = Einzelgreifer, d.h. erster Greifer 62-1; 2 = Doppelgreifer, d.h. zweiter Greifer 62-2; 3 = Kombigreifer, d.h. dritter Greifer 62-3). Dabei wird für jede Lage A bis H zwischen einer äußeren (obere Zeile der Lage) und einer inneren (untere Zeile der Lage) Stellung unterschieden. Die Stellung der Leiterenden entspricht dabei der Lage der einzelnen Leiterenden und ist für die nachfolgende Gestaltung der entsprechend angepassten Schränkkronen 70A-70H von Bedeutung. In Abhängigkeit der Stellung wird auf der zugehörigen Schränkkrone eine Innennut 86i - zum Bilden einer inneren Aufnahmetasche 68i - oder eine Außennut 86a - zum Bilden einer äußeren Aufnahmetasche 68a - vorgesehen, wie dies weiter unten anhand der Fig. 12 und 13 noch erläutert wird. Lediglich auf der äußersten Krone 70A werden in diesem Beispiel alle Leiterenden nur auf einen Durchmesser geweitet.

Die Bewegung der einzelnen Greifer 62-1, 66-2, 66-3 - hier insgesamt zwölf Greifer - beim Weiten wird einzeln durch die Steuerung 54 anhand eines Satzes von vorab abgespeicherten Parametern (Steuerdatensatz) angesteuert. Gleichzeitig können somit Leiterenden 34a-34h von zwölf Statornuten 20 geweitet werden; sind alle Leiterenden 34a-34h dieser zwölf Statornuten 20 geweitet, wird das Statorbauteil 18 relativ zu der Radialbiegeeinrichtung 36 um einen dem Statornutabstand entsprechenden Winkel gedreht, um die Leiterenden 34a-34h des nächsten Satzes von zwölf Statornuten 20 durch die zwölf Greifer 62-1, 62-2, 62-3 zu weiten. Dies wird noch einmal wiederholt, bis alle Leiterenden 34a-34h aller 36 Statornuten 20 geweitet worden sind. Die Relativdrehung von Statorbauteil 18 und Radialbiegeeinrichtung 36 kann je nach Bauart durch Drehen des Statorbauteils 18 bei stationärer Radialbiegeeinrichtung 36 oder durch Drehen der Radialbiegeeinrichtung 36 bei stationärem Statorbauteil 18 oder durch kombiniertes Drehen von Statorbauteil 18 und Radialbiegeeinrichtung 36 erfolgen.

Im Gegensatz zum bisher insbesondere für Statoren der ersten Kategorie verwendeten Ansatz können die Leiterenden 34a-34h einer Lage A bis H (58a-58h) bei der in der Tabelle dargestellten Ausführungsform nicht mehr alle auf denselben Durchmesser geweitet werden. Die Abbildung der finalen Stellungen der Leiterenden des Stators 50 sowie dessen Leiterendenpaarungen erfordern einen hochflexiblen Weitvorgang mit individuell parametrierbaren Leiterenden. Somit wird für jedes Leiterende 34a-34h für alle Statornuten 20 auch innerhalb einer Lage A bis H ein Satz an Parametern hinterlegt, welcher letztendlich die radiale Position des Leiterendes 34a-34h bestimmt. Dadurch kann gewährleistet werden, dass die Leiterenden 34a-34h immer in der für sie vorgesehenen Außennut 86a oder Innennut 86i der Schränkkrone 70A-70H gefügt werden können.

Der erhöhte Parametrieraufwand kann durch die Einführung von sogenannten Master-Steuerdatensätzen strukturiert und vereinfacht werden. Die Weitvorgänge zum Weiten mehrerer Leiterenden 34a-34h einer Lage 58a-58h mit dem gleichen Durchmesser können steuerungstechnisch zu einem Master-Weitvorgang zusammengefasst werden, mit dessen Hilfe sich die Variantenvielfalt der Leiterendenstellungen reduzieren lässt. Dadurch greift der Weitvorgang jedes zugeordneten Leiterendes 34a-34h den Master-Steuerdatensatz (Parametersatz) des hinterlegten Master-Weitvorganges ab. Dabei kann flexibel festgelegt werden, welche Parameter für die einzelnen Leiterenden vom jeweiligen Master-Weitvorgang übernommen werden sollen. Attribute wie die Greifernummer, die zu bearbeitenden Nutnummern etc. können weiterhin spezifisch parametriert werden.

Betrachtet man das zuvor abgebildete, exemplarische Weitschema kann man erkennen, dass die einzelnen Statornuten unterschiedliche Weitprozesse erfordern. Je nach dem, auf welche Lage A-H die Leiterenden 34a-34h für den nachfolgenden Schränkprozess geweitet werden sollen, werden diese entweder direkt zusammen oder einzeln gegriffen. Während z.B. für Statornut 4-9, 13-15 oder 22-24 lediglich Einzelweitprozesse ausgeführt werden, kommen für die Statornuten 1-3 bzw. 19-21 rein pärchenweise Greifvorgänge zum Einsatz. Die Art des Greif- und Weitvorganges kann der Ziffer 1 bis 3 in der zweiten Zeile (unterhalb der Bezeichnung des Greifers 1 bis Greifer 12 in der ersten Zeile) entnommen werden. Ziffer 1 steht für rein einzelnes Greifen - hierfür wird der erste Greifer 62-1 eingesetzt. Ziffer 2 steht für rein paarweises Greifen - hierfür wird der zweite Greifer 62-2 eingesetzt. Die Nuten 10-12 sowie 16-18 bilden dabei einen Sonderfall, bei dem sowohl einzelne Leiterenden wie auch Leiterendenpärchen in radialer Richtung geweitet werden müssen. Hier steht die Ziffer 3 für die Verwendung des Kombigreifers - dritter Greifer 62-3.

In Abhängigkeit der vorgegebenen Leiterendenstellung der einzelnen Statornuten und des gewählten Greifertyps 62-1, 62-2, 62-3 kann zwischen unterschiedlichen Greifabläufen unterschieden werden.

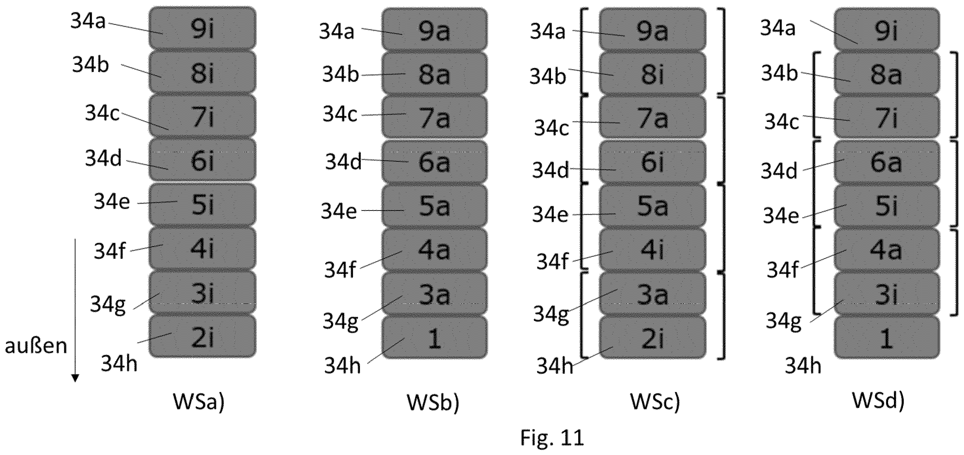

Vier exemplarische Weitsequenzen sind in Fig. 11 dargestellt. Die Weitsequenzen WSa) bis WSd) zeigen jeweils eine Weitsequenz von acht aus einer Statornut 20 vorstehenden Leiterenden, wobei hier die Ziffer 1 für die Sonderleiterenden (siehe Spalten 10-18, 22-24 und 34-36 und die Ziffern 2 bis 9 für die durch auf die Lagen H bis A zu weitenden Leiterenden stehen (die durch die Kronen H bis A zu schränken sind) und der Buchstabe a für die äußere Zeile der jeweiligen Lage H bis A und der Buchstabe i für die innere Zeile der jeweiligen Lage H bis A steht. Die Weitsequenzen WSa) und WSb) erfolgen durch einzelnes Weiten der einzelnen Leiterenden 34a-34h, wofür der erste Greifer 62-1 (Einzelgreifer) verwendet wird. Für den Weitvorgang von Einzelpins kann zudem eine innere Endstellung (Weitsequenz WSa)) und eine äußere Endstellung (Weitsequenz WSb)) unterschieden werden. Bei der Weitsequenz WSc) werden die Leiterenden 34a-34h paarweise geweitet, hierzu wird der zweite Greifer 62-2 verwendet. Bei der Weitsequenz WSd) werden die Leiterenden 34a-34h kombiniert einzeln und paarweise geweitet, wofür der dritte Greifer 62-3 verwendet wird.

Nach der erfolgten radialen Aufweitung der Leiterenden werden diese anschließend in einem Schränkvorgang gegeneinander verdreht. Dies erfolgt mittels der Umfangsbiegeeinrichtung 38.

Die Umfangsbiegeeinrichtung 38 ist vom Grundaufbau in der aus den Literaturstellen [1] bis [5] bekannten Weise aufgebaut, wobei die als Schränkkronen 70A-70H ausgebildeten Biegeeinheiten 64-1, 64-2 gesondert an das Wickelschema des Stators 50 und das sich daraus ergebende Muster von zu verbindenden Leiterenden 34a-34h (siehe z.B. Fig. 5 oder obige Tabelle) angepasst sind. Die Schränkkronen 70A-70H weisen an ihrem freien Ende die ringförmige Anordnungen 66-1, 66-2 von Aufnahmetaschen 68a, 68i auf. Bei einem Ausführungsbeispiel der Umfangsbiegeeinrichtung 38 weisen alle weiter innen liegenden Schränkkronen 70B bis 70H innere Aufnahmetasche 68i und äußere Aufnahmetaschen 68a auf, wie dies in Fig. 12 anhand einer beispielhaft dargestellten Schränkkrone 70B gezeigt ist. Bei dem hier dargestellten Ausführungsbeispiel liegen die Leiterenden 34a der äußersten Lage A, 58a (mit Ausnahme von Sonderleitenden) auf einem Durchmesser, so dass die äußere Schränkkrone A nur Innennuten 86i aufweist. Einige der Leiterenden der äußersten Lage können Sonderleiterenden sein, die beispielsweise zum Verschalten der Spulenwicklung dienen und durch einen gesonderte Schränkkrone A-Sonder geschränkt werden.

Die Schränkkronen 70B-70H weisen jeweils eine Ringwand 84 auf, an deren axial freien Ende die Anordnung 66-1, 66-2 von Aufnahmetaschen 68a, 68i ausgebildet ist. Die radial inneren Aufnahmetaschen 68a sind durch radial nach innen und am axialen Ende offen ausgebildete Innennuten 86i gebildet. Die radial äußeren Aufnahmetaschen 68a sind durch radial außen und am axialen Ende offen ausgebildete Außennuten 86a gebildet.

Zum Schränken werden die geweiteten Leiterenden der Hairpins 12 in die jeweiligen Nuten 86a, 86i der Schränkkrone 70A-70H eingeführt. Wie man der obigen Tabelle entnehmen kann, wird jede Lage A bis H dabei im oder gegen den Uhrzeigersinn um einen bestimmten Drehwinkel um ihre Mittelachse geschränkt. Zusätzlich zur rotatorischen Bewegung der Schränkkronen 70A-70H werden das Statorbauteil 18 oder auch die Schränkkronen 70A-70H axial nachgeführt bzw. aufeinander zu bewegt, da es durch die Schränkbewegung zu einer Verkürzung der Leiterendenlänge kommt. Die Schränkkronen 70A-70H besitzen am Umfang verteilte Nuten 86a, 86i für die Aufnahme der Leiterenden 34a-34h. Durch den ineinander geschachtelten Aufbau mehrerer solcher Schränkkronen werden die einzelnen Nuten 86a, 86i der Schränkkronen 70A-70H durch die jeweils nächste Schränkkrone 70A-70H nach außen sowie nach innen hin geschlossen. Für die innerste bzw. die äußerste Schränkkrone 70A, 70H kann zudem ein Ring als Schließkontur verwendet werden. Die Nuten 86a, 86i der Schränkkronen 70A-70H sind wechselnd über den gesamten Umfang der Schränkkrone 70A-70H verteilt. Jede Schränkkrone 70A-70H kann Innen- sowie auch Außennuten 86i, 86a besitzen, deren Positionen speziell auf den zu bearbeitenden Stator 50 abgestimmt sind. In Fig. 12 und 13 ist eine exemplarische Schränkkrone 70B mit Innennuten 86i und Außennuten 86a dargestellt.

Die Verteilung der Nuten 86a, 86i auf der Schränkkrone 70A-70H ist dabei von dem zuvor erfolgten Weitprozess abhängig. Bei der obigen Beschreibung des Weitprozesses wurde auf die zwei unterschiedlichen Stellungen a und i pro Lage eingegangen. Für ein Leiterende auf einer äußeren Lage a erhält das zugehörige Schränkwerkzeug 70A-70H eine nach außen geöffnete Außennut 86a, für eine innere Lage dementsprechend eine Innennut 86i. Jedes Leiterende des Stators 50 erhält seine eigene Schränkkronennut 86a, 86i.

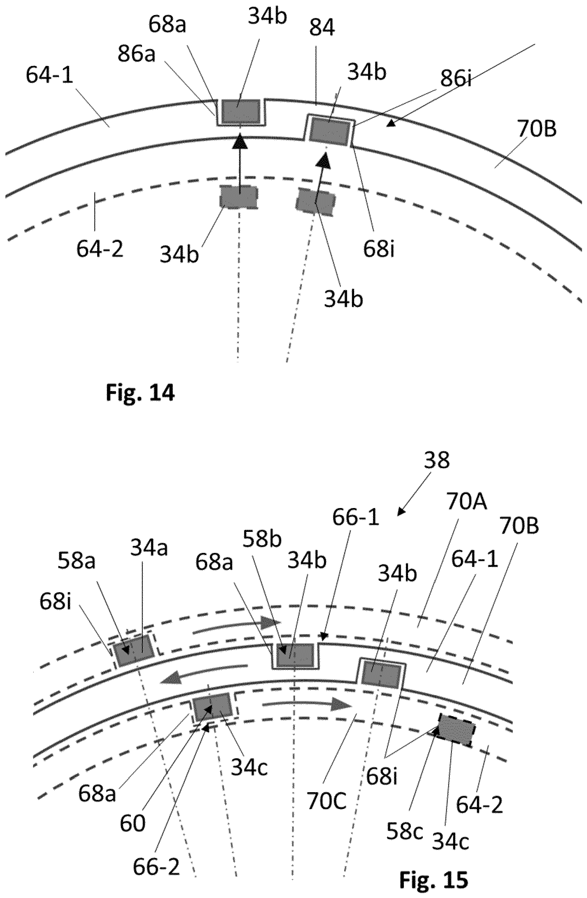

Dies ist in Fig. 14 am Beispiel der Schränkkrone 70B dargestellt, wobei zu Darstellungszwecken nur eine Innennut 86i und eine Außennut 86a gezeigt ist. Mit durchgezogenen Linien sind die in die Innennut 86i und Außennut 86a eingeführten Leiterenden 34b gezeigt. Die radiale Position dieser Leiterenden 34b vor dem Weiten ist gestrichelt dargestellt.

Die Stellung der Leiterenden 34b wird durch den Öffnungszeitpunkt während des Weitvorgangs bestimmt. Zum Verfahren der Greifer 62-1, 62-2, 62-3 in radialer Richtung mit gegriffenem Leiterende wird definiert, an welcher Stelle das Leiterende zu liegen kommen soll; damit verbunden wird definiert, wann der Greifer 621, 62-2, 62-3 das Leiterende freigeben soll.

Die Freigabe des Leiterendes während der Weitbewegung kann dabei mit oder ohne Stopp erfolgen.

Für einen definierten Stopp wird die Achse (d.h. hier der Bewegungsaktor des jeweiligen Greifers) an der geplanten, inneren Sollposition kurz angehalten, der Greifer 62-1, 62-2, 62-3 geöffnet und das Leiterende losgelassen. Da der Weitvorgang in der Regel von innen nach außen erfolgt, wird die innere Stellung zuerst erreicht.

Im Gegensatz dazu wird beim Loslassen des Leiterendes während der Bewegung, so gesehen On-the-Fly, die Achse nicht gestoppt. Hierbei wird das Leiterende beim Erreichen einer definierten Position während des Verfahrens der Weitachse gelöst.

Die Ausgangsstellung der Nuten 86a, 86i der Schränkkronen 70A-70H vor dem Schränken entspricht dem Endergebnis der Leiterendenpositionen nach dem Weiten (siehe z.B. oberer Teil der obigen Tabelle und Fig. 14), wohingegen die Leiterendenstellungen nach dem Schränken das finale Verschaltschema des Stators widerspiegeln. Dementsprechend folgt auch die Anordnung der Nuten 86a, 86i der einzelnen Schränkkronen 70A-70H dem elektrischen Schaltschema des Stators 50, damit die zusammengehörenden Leiterenden miteinander verbunden werden.

Ein exemplarisches Verschaltschema und zugleich das Endergebnis des Schränkvorganges ist in dem unteren Teil der obigen Tabelle dargestellt. Während des Schränkvorganges werden die Schränkwerkzeuge - hier die Schränkkronen 70A-70H - um einen definierten Winkel, in diesem Fall um drei Nutabstände, im oder gegen den Uhrzeigersinn verdreht (siehe Pfeilrichtung). Sind die Leiterenden zu Beginn des Weitvorganges noch um sechs Nuten voneinander getrennt, so bilden sie anschließend nach der entgegen gerichteten Verschränkung in Umfangsrichtung ein Pärchen. Zwei exemplarische Pärchenbildungen können der Darstellung der Pfeile in der obigen Tabelle entnommen werden. Die Pfeile zeigen dabei die Bewegung der Leiterenden während des Schränkvorganges auf. Durch die Stellung der Leiterenden kann, wie beschrieben, bestimmt werden, in welche Aufnahmetasche 68a, 68i - eine Nut 86a, 86i einer der Schränkkronen 70A-70H - sie später einmal eintauchen werden.

In der Fig. 14 ist das Prinzip der inneren Stellung i der Innennuten 86i und der äußeren Stellung a der Außennuten 86a noch einmal schematisch dargestellt. Die innere radiale Position i, auf der die Innennuten 86i der jeweiligen Schränkkrone 70B liegen, wird dabei beim Weiten - hier z.B. mit dem ersten Greifer 62-1 - zuerst erreicht. Wie deutlich zu erkennen ist, unterscheiden sich beide Positionen a, i durch die Position der Ringwandung 84 der Schränkkrone 70B. Diese gibt letztendlich vor, in welcher Richtung (außen oder innen) die Pärchenbildung stattfinden soll. Für eine rein einseitig genutete Krone beträgt der Abstand zusammengehöriger Leiterenden immer eine Distanz von mindestens einer Wandstärke. Jedoch können durch das Prinzip der inneren und äußeren Aufnahmetaschen 68i, 68a, hier gebildet durch die Innennuten 86i und die Außennuten 86a auch geringere radiale Versetzungen zwischen den geweiteten Leiterenden 34b gehandhabt werden, und mehr insbesondere solche Versetzungen, die bei Leiterenden auf Zwischenpositionen 60 gegenüber Leiterenden auf den regulären Lagen 58c, 58d auftreten. Dabei kann im Vorfeld je nach Schaltbild und Stator 50 ausgewählt werden, ob innere Aufnahmetaschen 68i oder äußere Aufnahmetaschen der jeweiligen Biegeeinheiten 64-1, 64-2 auf der radialen Position einer der regulären Lagen oder auf der Zwischenposition liegen.

Durch die Kombination der verschiedenen radialen Positionen i, a der Innennuten und Außennuten 86i, 86a auf der Schränkkrone 70A-70H können die zu verschaltenden Leiterenden 34a-34h möglichst nahe zueinander platziert werden. Mit dem beschriebenen Prozess und den dazu passenden Werkzeugen können selbst Statoren 50 mit Lagesprüngen auf der Schränkseite in Großserie schnell und prozesssicher realisiert werden.

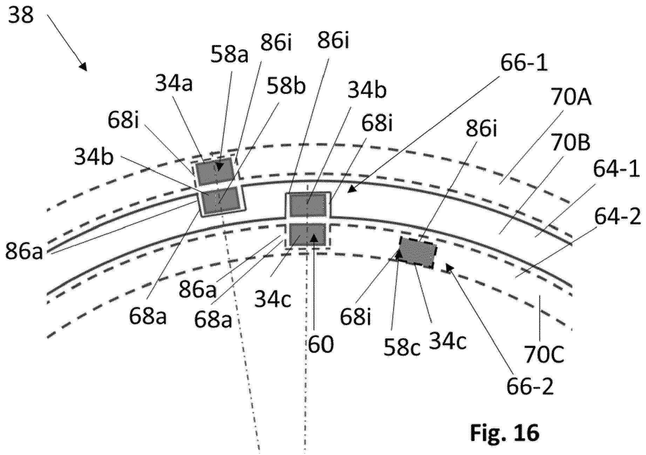

Ein exemplarischer Schränkprozess für wechselnd genutete Schränkkronen 70A-70C und die daraus resultierenden Leiterendenpaarungen können den Fig. 15 und 16 entnommen werden. Fig. 15 zeigt dabei die Stellung der Leiterenden zweier zu bildender Leiterendenpaare vor dem Schränken; und Fig. 16 zeigt die Stellung nach dem Schränken.

Da die jeweils weiter außen angeordnete Biegeeinheit 64-1 radial nach innen geöffnete Innennuten 86i und die jeweils weiter innen liegende Biegeeinheit 64-2 radial nach außen geöffnete Außennuten 86a aufweist, können durch Ausrichten der Innennuten 86i mit den Außennuten 86a nahe nebeneinander liegende Leiterendenpaare gebildet werden. Eines der in Fig. 16 gezeigten Leiterendenpaare, z.B. das links oben dargestellte Leiterendenpaar, dient z.B. zum Verbinden zweier Hairpins desselben Kranzes 56a, während das andere Leiterendenpaar, z.B. das mittig dargestellte Leiterendenpaar, zum elektrischen Verbinden der Kränze 56a, 56b dienen kann, wobei zumindest einer der Leiterenden dieses Leiterendenpaars auf der wenigstens einen Zwischenposition 60 liegt.

Werden im Schritt a) Leiterenden mittels des zweiten Greifers 62-1 oder des dritten Greifers 62-3 paarweise geweitet, dann wird das geweitete Leiterendenpaar, welches einen entsprechend geringen Abstand aufweist, zum Schränken in Aufnahmenuten 68a, 68i der benachbarten Schränkkronen 70A, 70B, 70C eingebracht, die in der Ausgangssituation zueinander offen und zueinander ausgerichtet sind, so wie dies im Prinzip auch (wenngleich für die Endsituation) in Fig. 16 dargestellt ist. Dasjenige Leiterende des Leiterendenpaares, welches radial weiter innen liegt, wird in eine Außennut 86a der radial weiter innen liegenden Schränkkrone 70C eingefügt; und dasjenige Leiterende des Leiterendenpaares, welches radial weiter außen liegt wird in eine entsprechend ausgerichtete Innennut 86i der radial weiter außen liegenden Schränkkrone 70B eingefügt. Dann werden die Schränkkronen 70A-70C verdreht, um z.B. neue Leiterendenpaare, die miteinander verschweißt werden sollen zu bilden. Es kann auch sein, dass nach dem Schränken einzelne Leiterenden verbleiben, die dann zum externen Anschluss der Spulen dienen.

Wenngleich die Leiterendenumformvorrichtung 14 am Beispiel der Herstellung der Statoren 50 der zweiten Kategorie beschrieben worden ist, ist klar, dass die gleiche Leiterendenumformvorrichtung 14 lediglich unter Anpassung der Parametrisierung des Weitvorganges und der Auswahl der passenden Schränkkronen 70A-70H auch zur Herstellung der Statoren der ersten Kategorie verwendbar sind. Es ist somit ein sehr flexibles Fertigungsverfahren für sehr unterschiedliche Statoren 50 durchführbar.

Um eine flexiblere und prozesssichere Herstellung sehr unterschiedlicher Hairpin-Statoren (50) zu ermöglichen, sind somit eine Leiterendenumformverfahren und eine Leiterendenumformvorrichtung (14) beschrieben worden, mit denen aus Statornuten (20) vorstehende Leiterenden (34a-34h) von Hairpins (12) zum Bilden von Spulenwicklungen umgeformt werden. Dabei werden die Leiterenden (34a-34h) mittels unterschiedlicher Weitwerkzeuge (61-1, 61-2, 61-3) wie z.B. Greifer (62-1, 62-2, 62-3), die ein einzelnes oder paarweises Greifen ermöglichen, derart in Radialrichtung umgeformt, dass ein erster Teil auf einer ersten radialen Lage (58b), ein zweiter Teil auf einer zweiten radialen Lage (58c) und ein dritter Teil auf wenigstens einer Zwischenlage (60) dazwischen liegt. Anschließend werden die Leiterenden (34a-34h) mittels Schränkwerkzeugen (64-1, 64-2; 70A-70H) in Umfangsrichtung umgeformt, wobei ein weiter außen liegendes Schränkwerkzeug nach innen offene innere Aufnahmetaschen (68a) und ein weiter innen liegendes Schränkwerkzeug nach außen offene äußere Aufnahmetaschen (68i) aufweist. Bei bevorzugten Ausgestaltungen weist wenigstens eines der Schränkwerkzeuge (64-1, 64-2; 70A-70H) sowohl innere und äußere Aufnahmetaschen (68a, 68i) auf. Eine dieser Gruppen von inneren und äußeren Aufnahmetaschen liegt auf der wenigstens einen Zwischenposition, um den dritten Teil der Leiterenden umzuformen.

### Bezugszeichenliste:

- 10: Statorherstellvorrichtung
- 12: Hairpin
- 14: Leiterendenumformvorrichtung
- 16: Blechpaketherstellvorrichtung
- 18: Statorbauteil
- 20: Statornut
- 22: Vorrichtung zum Herstellen von Nutisolierungen
- 24: Nutisolierung
- 26: Hairpinherstellvorrichtung
- 28: Vorpositionierungsvorrichtung
- 30: Hairpineinsteckvorrichtung
- 32: Wickelkopf
- 34: Leiterende
- 34a: erstes Leiterende
- 34b: zweites Leiterende
- 34c: drittes Leiterende
- 34d: viertes Leiterende
- 34e: fünftes Leiterende
- 34f: sechstes Leiterende
- 34g: siebtes Leiterende
- 34h: achtes Leiterende
- 36: Radialbiegeeinrichtung
- 38: Umfangsbiegeeinrichtung
- 40: Spann- und/oder Fixiervorrichtung
- 42: Leiterendenschneidvorrichtung
- 44: Leiterendenschweißvorrichtung
- 46: Vorrichtungen zum elektrischen Kontaktieren und/oder Testen und/oder Vergießen, ....
- 48: Wickelkopfseite
- 50: Stator
- 52: Schränkseite
- 54: Steuerung
- 56a: erster Kranz
- 56b: zweiter Kranz
- 56c: dritter Kranz
- 56d: vierter Kranz
- 58a: primäre Lage
- 58b: sekundäre Lage
- 58c: tertiäre Lage
- 58d: quartäre Lage
- 58e: quintäre Lage
- 58f: sextäre Lage
- 58g: septimäre Lage
- 58h: oktiväre Lage
- 60: Zwischenposition
- 61-1: erstes Weitwerkzeug
- 61-2: zweites Weitwerkzeug
- 61-3: drittes Weitwerkzeug
- 62-1: erster Greifer
- 62-2: zweiter Greifer
- 62-3: dritter Greifer
- 64-1: erste Biegeeinheit
- 64-2: zweite Biegeeinheit
- 66-1: erste ringförmige Anordnung von Aufnahmetaschen
- 66-2: zweite ringförmige Anordnung von Aufnahmetaschen
- 68a: radial äußere Aufnahmetasche
- 68i: radial innere Aufnahmetasche
- 70A-70H: Schränkkronen für die Lagen 58a-58h
- 72a: erste Greifbacke
- 72b: zweite Greifbacke
- 74: Anbindungsbohrung
- 76: Greifbereich
- 78: hintere Schulter
- 80: vordere Schulter
- 82-1: erster Greifabschnitt
- 82-2: zweiter Greifabschnitt
- 83: einstellbare Eintauchtiefe
- 84: Ringwand
- 86a: Außennuten
- 86i: Innennuten
- e: Abstand zwischen zu verschweißenden Leiterenden

## Patentansprüche

1. Leiterendenumformverfahren zum Umformen von Leiterenden (34a-34h), die aus einer sich ringförmig um eine Mittelachse erstreckenden Anordnung von Statornuten (20) eines Statorbauteils (18) zum Bilden eines Stators (50) einer elektrischen Maschine in axialer Richtung vorstehen, umfassend:
a) Weiten der Leiterenden (34a-34h) durch Biegen der Leiterenden (34a-34h) in radialer Richtung mittels mehrerer Weitwerkzeuge (61-1, 61-2, 61-3) einer Radialbiegeeinrichtung (36), so dass durch das Weiten ein erster Teil der Leiterenden (34a-34h) auf einer ersten radialen Lage (58b) liegt und ein zweiter Teil der Leiterenden (34a-34h) auf einer zweiten radialen Lage (58c) liegt, und
b) Schränken der Leiterenden (34a-34h) durch Biegen in Umfangsrichtung mittels einer Umfangsbiegeeinrichtung (38), die eine in einer ersten Drehrichtung drehbare erste Biegeeinheit (64-1) mit einer ersten ringförmigen Anordnung (66-1) von Aufnahmetaschen (68a, 68i) und eine konzentrisch hierzu angeordnete in der zweiten Drehrichtung drehbare zweite Biegeeinheit (64-2) mit einer zweiten ringförmigen Anordnung (66-2) von Aufnahmetaschen (68a, 68i) aufweist, wobei Schritt b) umfasst:
b1) Einführen des in Schritt a) auf die erste radiale Lage (58b) geweiteten ersten Teils der Leiterenden (34a-34h) in die erste Anordnung (66-1) von Aufnahmetaschen (68a, 68i), Einführen des in Schritt a) auf die zweite radiale Lage (58c) geweiteten zweiten Teils von Leiterenden (34a-34h) in die zweite Anordnung (66-2) von Aufnahmetaschen (68a, 68i) und
b2) gegensätzliches Drehen der ersten Biegeeinheit (64-1) und der zweiten Biegeeinheit (64-2), um den ersten Teil Leiterenden (34b) und den zweiten Teil Leiterenden (34c) in gegensätzliche Umfangsrichtungen zu biegen,
**dadurch gekennzeichnet, dass** Schritt a) umfasst:
a1) Erfassen wenigstens eines einzelnen Leiterendes (34a-34h) durch wenigstens ein erstes Weitwerkzeug (61-1), um das so erfasste wenigstens eine einzelne Leiterende (34a-34h) einzeln in radialer Richtung zu biegen, und gemeinsames Erfassen wenigstens eines Paars radial benachbarter Leiterenden (34a-34h) durch wenigstens ein zweites Weitwerkzeug (61-2), um das Paar radial benachbarter Leiterenden (34a-34h) gemeinsam in radialer Richtung zu biegen, wobei Schritt a1) derart durchgeführt wird, dass ein dritter Teil der Leiterenden (34a-34h) auf wenigstens einer radialen Zwischenposition (60) zwischen der ersten und zweiten radialen Lage (58b, 58c) liegt,
dass Schritt b) umfasst:
b0) Bereitstellen der ersten Biegeeinheit (64-1) und zweiten Biegeeinheit (64-2) derart, dass diejenige Biegeeinheit (64-1, 64-2), die radial weiter außen liegt, radial innere Aufnahmetaschen (68i) aufweist, die zur radial inneren Seite hin offen sind, und diejenige Biegeeinheit (64-1, 64-2), die radial weiter innen liegt, radial äußere Aufnahmetaschen (68a) aufweist, die zur radial äußeren Seite offen sind, wobei ein Teil der Aufnahmetaschen (68a, 68i) der ersten Anordnung (66-1) auf der ersten radialen Lage (58b) liegt und ein anderer Teil der Aufnahmetaschen (68a, 68i) der ersten Anordnung (66-1) radial versetzt hierzu auf einer radialen Zwischenposition (60) liegt und/oder ein Teil der Aufnahmetaschen (68a, 68i) der zweiten Anordnung (66-2) auf der zweiten radialen Lage (58c) liegt und ein anderer Teil der Aufnahmetaschen (68a, 68i) der zweiten Anordnung (66-2) radial versetzt hierzu auf einer radialen Zwischenposition (60) liegt, und
dass Schritt b1) umfasst:
b1a) Einfügen von auf die wenigstens eine radiale Zwischenposition (60) geweiteten Leiterenden (34b-34g) in eine Aufnahmetasche (68a, 68i) des anderen Teils der Aufnahmetaschen (68a, 68i) der ersten oder zweiten Anordnung (66-1, 66-2) und Einfügen jeweils eines radial innen liegenden Leiterendes jedes Paars in Schritt a1) gemeinsam gebogener Leiterenden (34a-34h) in eine der radial äußeren Aufnahmetaschen (68a) und des radial außen liegenden Leiterendes des Paars in eine der radial inneren Aufnahmetaschen (68i).

2. Leiterendenumformverfahren nach Anspruch 1, **dadurch gekennzeichnet, dass** Schritt a) wenigstens einen oder mehrere der Schritte umfasst:
a0) Bereitstellen eines eigenen Radialbiege-Steuerdatensatzes für jedes einzeln radial zu biegende Leiterende (34a-34h) oder jedes gemeinsam zu biegende Leiterendenpaar und einzelnes Ansteuern des jeweiligen Weitwerkzeuges (61-1, 61-2, 61-3) mittels des dem zu biegenden Leiterende (34a-34h) zugeordneten Radialbiege-Steuerdatensatzes,
a2) gleichzeitiges Verwenden verschiedener Weitwerkzeuge (61-1, 61-2, 61-3) aus der Gruppe von Weitwerkzeugen, die ein Einzelweitwerkzeug zum Erfassen eines einzelnen Leiterendes, ein Leiterendenpaarweitwerkzeug zum Erfassen eines Paars von Leiterenden und ein Kombinationsweitwerkzeug, das an unterschiedlichen Erfassungsabschnitten zum Erfassen eines einzelnen Leiterendes (34a-34h) und zum Erfassen eines Paars von Leiterenden (34a-34h) ausgebildet ist;
a2a) gleichzeitiges Verwenden verschiedener Greifer (62-1, 62-2, 62-3) aus der Gruppe von Greifern, die einen Einzelgreifer zum Greifen eines einzelnen Leiterendes, einen Leiterendenpaargreifer zum Greifen eines Paars von Leiterenden und einen Kombinationsgreifer, der an unterschiedlichen Greifabschnitten (82-1, 82-2) zum Greifen eines einzelnen Leiterendes (34a-34h) und zum Greifen eines Paars von Leiterenden (34a-34h) ausgebildet ist, als Weitwerkzeuge (61-1, 61-2, 61-3);
a3) gleichzeitiges Erfassen mehrerer an gleicher radialer Position aus den Statornuten (20) vorstehender Leiterenden (34a-34h) mit den Weitwerkzeugen (61-1, 61-2, 61-3) und Loslassen einzelner oder Paare der so erfassten Leiterenden (34a-34h) nach unterschiedlicher Bewegung in radialer Richtung, um so den ersten Teil auf die erste radiale Lage (58b), den dritten Teil auf die wenigstens eine radiale Zwischenposition (60) und den zweiten Teil auf die zweite radiale Lage (58c) zu biegen.

3. Leiterendenumformverfahren nach Anspruch 2, **dadurch gekennzeichnet, dass** Schritt a0) wenigstens einen oder mehrere der Schritte umfasst:
a0a) Erzeugen der Radialbiege-Steuerdatensätze entsprechend eines für den herzustellenden Stator (50) gewünschten Wickelschemas;
a0b) Erzeugen eines Master-Steuerdatensatz für ein Leiterende (34a-34h) oder ein Leiterendenpaar, das gleich zu einer Gruppe von Leiterenden (34a-34h) oder Leiterendenpaaren zu biegen ist und Erzeugen der weiteren Steuerdatensätze der gleich zu biegenden Gruppe von Leiterenden (34a-34h) oder Leiterendenpaaren unter Kopieren des Master-Steuerdatensatzes;
a0c) Parametrierung der Sollposition und der Radialbiegebewegung für jedes Leiterende (34a-34h), um den Radialbiege-Steuerdatensatz zu erzeugen.

4. Leiterendenumformverfahren nach einem der voranstehenden Ansprüche, **dadurch gekennzeichnet, dass** Schritt b0) wenigstens einen oder mehrere der Schritte umfasst:
b01) Bereitstellen einer ersten Schränkkrone (70B) mit einer Ringwand (84), an deren axialen Ende die erste Anordnung (66-1) von Aufnahmetaschen (68a, 68i) ausgebildet ist, als erste Biegeeinheit (64-1), wobei radial innere Aufnahmetaschen (68i) durch radial nach innen und am axialen Ende offen ausgebildete Innennuten (86i) und radial äußere Aufnahmetaschen (68a) durch radial außen und am axialen Ende offen ausgebildete Außennuten (86a) gebildet sind;
b02) Bereitstellen einer zweiten Schränkkrone (70C) mit einer Ringwand (84), an deren axialen Ende die zweite Anordnung (66-2) von Aufnahmetaschen (68a, 68i) ausgebildet ist, als zweite Biegeeinheit (64-1), wobei radial innere Aufnahmetaschen (68i) durch radial nach innen und am axialen Ende offen ausgebildete Innennuten (86i) und radial äußere Aufnahmetaschen (68a) durch radial außen und am axialen Ende offen ausgebildete Außennuten (86a) gebildet sind.

5. Leiterendenumformvorrichtung (14) zum Umformen von Leiterenden (34a-34h), die aus einer sich ringförmig um eine Mittelachse erstreckenden Anordnung von Statornuten (20) eines Statorbauteils (18) zum Bilden eines Stators (50) einer elektrischen Maschine in axialer Richtung vorstehen, umfassend:
eine Radialbiegeeinrichtung (36) zum Weiten der Leiterenden (34a-34h) mit mehreren Weitwerkzeugen (61-1, 61-2, 61-3), die zum Biegen der Leiterenden (34a-34h) in radialer Richtung derart ausgebildet sind, dass nach dem Biegen ein erster Teil der Leiterenden (34a-34h) auf einer ersten radialen Lage (58b) liegt und ein zweiter Teil der Leiterenden (34a-34h) auf einer zweiten radialen Lage (58c) liegt,
eine Umfangsbiegeeinrichtung (38) zum Schränken der Leiterenden (34a-34h) durch Biegen in Umfangsrichtung, wobei die Umfangsbiegeeinrichtung (38) eine in einer ersten Drehrichtung drehbare erste Biegeeinheit (64-1) mit einer ersten ringförmigen Anordnung (66-1) von Aufnahmetaschen (68a, 68i) und eine konzentrisch hierzu angeordnete in der zweiten Drehrichtung drehbare zweite Biegeeinheit (64-2) mit einer zweiten ringförmigen Anordnung (66-2) von Aufnahmetaschen (68a, 68i) aufweist,
und eine Steuerung (54), die dazu ausgebildet ist, die Leiterendenumformvorrichtung (14) anzusteuern zum
a) Weiten der Leiterenden (34a-34h) durch Biegen der Leiterenden (34a-34h) in radialer Richtung mittels der mehreren Weitwerkzeuge (61-1, 61-2, 61-3) der Radialbiegeeinrichtung (36), so dass durch das Weiten ein erster Teil der Leiterenden (34a-34h) auf einer ersten radialen Lage (58b) liegt und ein zweiter Teil der Leiterenden (34a-34h) auf einer zweiten radialen Lage (58c) liegt, und
b) Schränken der Leiterenden (34a-34h) durch Biegen in Umfangsrichtung mittels der Umfangsbiegeeinrichtung (38) durch
b1) Einführen des in Schritt a) auf die erste radiale Lage (58b) geweiteten ersten Teils der Leiterenden (34a-34h) in die erste Anordnung (66-1) von Aufnahmetaschen (68a, 68i), Einführen des in Schritt a) auf die zweite radiale Lage (58c) geweiteten zweiten Teils von Leiterenden (34a-34h) in die zweite Anordnung (66-2) von Aufnahmetaschen (68a, 68i) und
b2) gegensätzliches Drehen der ersten und zweiten Biegeeinheiten (64-1, 64-2), um den ersten Teil Leiterenden (34a-34h) und den zweiten Teil Leiterenden (34a-34h) in gegensätzliche Umfangsrichtungen zu biegen,
**dadurch gekennzeichnet, dass** von der ersten und zweiten Biegeeinrichtung (64-1, 64-2) diejenige Biegeeinheit (64-1), die radial weiter außen liegt, radial innere Aufnahmetaschen (68i) aufweist, die zur radial inneren Seite hin offen sind, und diejenige Biegeeinheit (64-2), die radial weiter innen liegt,
radial äußere Aufnahmetaschen (68a) aufweist, die zur radial äußeren Seite offen sind, wobei ein Teil der Aufnahmetaschen (68a, 68i) der ersten Anordnung (66-1) auf der ersten radialen Lage (58b) liegt und ein anderer Teil der Aufnahmetaschen (68a, 68i) der ersten Anordnung (66-1) radial versetzt hierzu auf einer radialen Zwischenposition (60) liegt und/oder ein Teil der Aufnahmetaschen (68a, 68i) der zweiten Anordnung (66-2) auf der zweiten radialen Lage (58c) liegt und ein anderer Teil der Aufnahmetaschen (68a, 68i) der zweiten Anordnung (66-2) radial versetzt hierzu auf einer radialen Zwischenposition (60) liegt,
dass die Steuerung (54) weiter dazu ausgebildet ist, beim Weiten gemäß Schritt a) die Leiterendenumformvorrichtung (14) anzusteuern zum
a1) Erfassen wenigstens eines einzelnen Leiterendes (34a-34h) durch wenigstens ein erstes Weitwerkzeug (61-1), um das so erfasste Leiterende (34a-34h) einzeln in radialer Richtung zu biegen,
und gemeinsames Erfassen wenigstens eines Paars radial benachbarter Leiterenden (34a-34h) durch wenigstens ein zweites Weitwerkzeug (61-2), um das Paar radial benachbarter Leiterenden (34a-34h) gemeinsam in radialer Richtung zu biegen, wobei die Steuerung (54) eingerichtet ist, ein Ansteuern der Weitwerkzeuge (61-1, 61-2, 61-3) so durchzuführen, dass ein dritter Teil der Leiterenden (34a-34h) auf wenigstens einer radialen Zwischenposition (60) zwischen der ersten und zweiten radialen Lage liegt,
und dass die Steuerung (54) weiter dazu ausgebildet ist, beim Einführen gemäß Schritt b1) die Leiterendenumformvorrichtung (14) anzusteuern zum
b1a) Einfügen von auf die wenigstens eine radiale Zwischenposition (60) geweiteten Leiterenden (34a-34h) in eine Aufnahmetasche (68a, 68i) des anderen Teils der ersten oder zweiten Anordnung (66-1, 66-2) und Einfügen jeweils eines radial innen liegenden Leiterendes jedes Paars in Schritt a1) gemeinsam gebogener Leiterenden (34a-34h) in eine der radial äußeren Aufnahmetaschen (68a) und des radial außen liegenden Leiterendes des Paars in eine der radial inneren Aufnahmetaschen (68i).

6. Leiterendenumformvorrichtung (14) nach Anspruch 5, **dadurch gekennzeichnet, dass** die Steuerung (54) dazu ausgebildet ist, die Weitwerkzeuge (61-1, 61-2, 61-3) der Radialbiegeeinrichtung (36) aufgrund einzelner eigener Radialbiege-Steuerdatensätze für jedes einzeln radial zu biegende Leiterende (34a-34h) oder jedes gemeinsam zu biegende Leiterendenpaar einzeln anzusteuern.

7. Leiterendenumformvorrichtung (14) nach einem der Ansprüche 5 oder 6, **dadurch gekennzeichnet, dass** die Radialbiegeeinrichtung (36)
7.1 unterschiedliche Weitwerkzeuge (61-1, 61-2, 61-3) aus der Gruppe von Weitwerkzeugen aufweist, die ein Einzelweitwerkzeug zum Erfassen eines einzelnen Leiterendes (34a-34h), ein Leiterendenpaarweitwerkzeug zum Erfassen eines Paars von Leiterenden (34a-34h) und ein Kombinationsweitwerkzeug, das an unterschiedlichen Erfassungsabschnitten zum Erfassen eines einzelnen Leiterendes (34a-34h) und zum Erfassen eines Paars von Leiterenden (34a-34h) ausgebildet ist; und/oder
7.1a als Weitwerkzeuge (61-1, 61-2, 61-3) unterschiedliche Greifer 62-1, 62-2, 62-3) aus der Gruppe von Greifern aufweist, die einen Einzelgreifer zum Greifen eines einzelnen Leiterendes (34a-34h), einen Leiterendenpaargreifer zum Greifen eines Paars von Leiterenden(34a-34h) und einen Kombinationsgreifer, der an unterschiedlichen Greifabschnitten (82-1, 82-2) zum Greifen eines einzelnen Leiterendes (34a-34h) und zum Greifen eines Paars von Leiterenden (34a-34h) ausgebildet ist; und/oder
7.2 Greifer (62-1, 62-2, 62-3) mit einer ersten Greiferbacke (72a) und einer zweiten Greiferbacke (72b) aufweist, die zum Greifen aufeinander zu und zum Lösen voneinander weg bewegbar sind, wobei an wenigstens einer der Greiferbacken (72a, 72b) zwischen zwei Schultern (78, 80) eine Aufnahmenut für das oder die zu greifenden Leiterenden (34a-34h) ausgebildet ist, die bei einem Einzelgreifer zum Umfassen eines einzelnen Leiterendes (34a-34h) und bei Leiterendenpaargreifern zum Umfassen des Paars Leiterenden (34a-34h) ausgebildet ist; und/oder
7.3 einen Kombinationsgreifer mit unterschiedlichen Greifabschnitten (82-1, 82-2) aufweist, von denen einer (82-2) zum Greifen eines einzelnen Leiterendes(34a-34h) und ein weiterer (82-1) zum Greifen eines Paars von Leiterenden (34a-34h) ausgebildet ist.

8. Leiterendenumformvorrichtung (14) nach einem der Ansprüche 5 bis 7, **dadurch gekennzeichnet, dass** die Steuerung (54) weiter dazu ausgebildet ist, die Radialbiegeeinrichtung (36) anzusteuern zum
a3) gleichzeitigen Erfassen mehrerer an gleicher radialer Position aus den Statornuten (20) vorstehender Leiterenden (34a-34h) mit den Weitwerkzeugen (61-1, 61-2, 61-3) und Loslassen einzelner oder Paare der so erfassten Leiterenden (34a-34h) nach unterschiedlicher Bewegung in radialer Richtung, um so den ersten Teil in die erste radiale Lage (58b), den dritten Teil auf die wenigstens eine radiale Zwischenposition (60) und den zweiten Teil in die zweite radiale Lage (58c) zu biegen.

9. Leiterendenumformvorrichtung (14) nach einem der Ansprüche 5 bis 8, **dadurch gekennzeichnet, dass** die Umfangsbiegeeinrichtung (38)
eine erste Schränkkrone (70B) mit einer Ringwand (84), an deren axialen Ende die erste Anordnung (66-1) von Aufnahmetaschen (68a, 68i) ausgebildet ist, als erste Biegeeinheit (64-1) aufweist, wobei radial innere Aufnahmetaschen (68i) durch radial nach innen und am axialen Ende offen ausgebildete Innennuten (86i) und radial äußere Aufnahmetaschen (68a) durch radial außen und am axialen Ende offen ausgebildete Außennuten (86a) gebildet sind; und/oder
eine zweite Schränkkrone (70c) mit einer Ringwand (84), an deren axialen Ende die zweite Anordnung (66-2) von Aufnahmetaschen (68a, 68i) ausgebildet ist, als zweite Biegeeinheit (64-2) aufweist, wobei radial innere Aufnahmetaschen (68i) durch radial nach innen und am axialen Ende offen ausgebildete Innennuten (86i) und radial äußere Aufnahmetaschen (68a) durch radial außen und am axialen Ende offen ausgebildete Außennuten (86a) gebildet sind.

10. Computerprogramm, umfassend Befehle, die die Leiterendenumformvorrichtung (14) nach einem der Ansprüche 5 bis 9 veranlassen, das Leiterendenumformverfahren nach einem der Ansprüche 1 bis 5 durchzuführen.

## Claims

1. Conductor end shaping method for shaping conductor ends (34a-34h) sticking out in an axial direction from an arrangement of stator slots (20) of a stator component (18) extending annularly about a central axis to form a stator (50) of an electric machine, the method comprising:
a) widening the conductor ends (34a-34h) by bending the conductor ends (34a-34h) in a radial direction by means of a plurality of widening tools (61-1, 61-2, 61-3) of a radial bending device (36), such that the widening causes a first part of the conductor ends (34a-34h) to be situated at a first radial position (58b) and a second part of the conductor ends (34a-34h) to be situated at a second radial position (58c); and
b) twisting the conductor ends (34a-34h) by bending in the circumferential direction using a circumferential bending device (38), which has a first bending unit (64-1) that can be rotated in a first direction of rotation and has a first annular arrangement (66-1) of receiving pockets (68a, 68i), and a second bending unit (64-2) that can be rotated in the second direction of rotation and is arranged concentrically with respect to the first bending unit (64-1) and has a second annular arrangement (66-2) of receiving pockets (68a, 68i), wherein step b) comprises
b1) inserting the first part of the conductor ends (34a-34h) widened in step a) to the first radial position (58b) into the first arrangement (66-1) of receiving pockets (68a, 68i), inserting the second part of the conductor ends (34a-34h) widened in step a) to the second radial position (58c) into the second arrangement (66-2) of receiving pockets (68a, 68i), and
b2) oppositely rotating the first bending unit (64-1) and the second bending unit (64-2) to bend the first part of conductor ends (34b) and the second part of conductor ends (34c) in opposite circumferential directions,
**characterized in that** step a) comprises:
a1) engaging at least one single conductor end (34a-34h) by at least a first widening tool (61-1) to bend the thus engaged at least one single conductor end (34a-34h) individually in the radial direction, and engaging at least one pair of radially adjacent conductor ends (34a-34h) jointly by at least a second widening tool (61-2), to jointly bend the pair of radially adjacent conductor ends (34a-34h) in the radial direction, wherein step a1) is performed such that a third part of the conductor ends (34a-34h) is situated at at least one intermediate radial position (60) between the first and second radial positions (58b, 58c),
b0) providing the first bending unit (64-1) and second bending unit (64-2) such that the bending unit (64-1, 64-2) that is located radially further out has radially inner receiving pockets (68i) that are open to the radially inner side, and the bending unit (64-1, 64-2) that is located radially further in has radially outer receiving pockets (68a) that are open to the radially outer side, wherein a part of the receiving pockets (68a, 68i) of the first arrangement (66-1) is located at the first radial position (58b) and another part of the receiving pockets (68a, 68i) of the first arrangement (66-1) is radially offset thereto and located at a radially intermediate position (60) and/or a part of the receiving pockets (68a, 68i) of the second arrangement (66-2) is located at the second radial position (58c) and another part of the receiving pockets (68a, 68i) of the second arrangement (66-2) is radially offset thereto and located at a radially intermediate position (60), and
**in that** step b1) comprises
b1a) inserting conductor ends (34b-34g) widened to the at least one radially intermediate position (60) into a receiving pocket (68a, 68i) of the other part of the receiving pockets (68a, 68i) of the first or second arrangement (66-1, 66-2) and inserting a radially inner conductor end of each pair of conductor ends (34a-34h) jointly bent in step a1) into one of the radially outer receiving pockets (68a) and the radially outer conductor end of the pair into one of the radially inner receiving pockets (68i).

2. Conductor end shaping method according to claim 1, **characterized in that** step a) comprises at least one or more of the steps:
a0) providing a separate radial bending control data set for each individual conductor end (34a-34h) to be radially bent or each pair of conductor ends to be jointly bent and individually controlling the respective widening tool (61-1, 61-2, 61-3) by means of the radial bending control data set assigned to the conductor end (34a-34h) to be bent,
a2) simultaneously using different widening tools (61-1, 61-2, 61-3) from the group of widening tools comprising a single widening tool for engaging a single conductor end, a pair-of-conductor-ends widening tool for engaging a pair of conductor ends, and a combination widening tool formed at different engagement sections for engaging a single conductor end (34a-34h) and for engaging a pair of conductor ends (34a-34h);
a2a) simultaneously using, as widening tools (61-1, 61-2, 61-3), different grippers (62-1, 62-2, 62-3) from the group of grippers comprising a single gripper for gripping a single conductor end, a pair-of-conductor-ends gripper for gripping a pair of conductor ends, and a combination gripper formed at different gripping sections (82-1, 82-2) for gripping a single conductor end (34a-34h) and for gripping a pair of conductor ends (34a-34h);
a3) simultaneously engaging by said widening tools (61-1, 61-2, 61-3) a plurality of conductor ends (34a-34h) sticking out at the same radial position from the stator slots (20) and releasing individual or pairs of the thus engaged conductor ends (34a-34h) after a different movement in the radial direction so as to bend the first part to the first radial position (58b), the third part to the at least one intermediate radial position (60) and the second part to the second radial position (58c).

3. Conductor end shaping method according to claim 2, **characterized in that** step a0) comprises at least one or more of the steps:
a0a) generating the radial bending control data sets according to a winding scheme desired for the stator (50) to be manufactured;
a0b) generating a master control data set for a conductor end (34a-34h) or a pair of conductor ends to be equally bent to a group of conductor ends (34a-34h) or pairs of conductor ends, and generating the further control data sets for the group of conductor ends (34a-34h) or pairs of conductor ends to be equally bent while copying the master control data set;
a0c) parameterizing the target position and the radial bending movement for each conductor end (34a-34h) to generate the radial bending control data set.

4. Conductor end shaping method according to any one of the preceding claims, **characterized in that** step b0) comprises at least one or more of the steps:
b01) providing, as a first bending unit (64-1), a first twisting crown (70B) having an annular wall (84), at the axial end of which the first arrangement (66-1) of receiving pockets (68a, 68i) is formed, wherein radially inner receiving pockets (68i) are formed by inner grooves (86i) formed radially inwardly and open at the axial end, and radially outer receiving pockets (68a) are formed by outer grooves (86a) formed radially outwardly and open at the axial end;
b02) providing, as a second bending unit (64-1), a second twisting crown (70C) having an annular wall (84), at the axial end of which the second arrangement (66-2) of receiving pockets (68a, 68i) is formed, wherein radially inner receiving pockets (68i) are formed by inner grooves (86i) formed radially inwardly and open at the axial end and radially outer receiving pockets (68a) are formed by outer grooves (86a) formed radially outwardly and open at the axial end.

5. Conductor end shaping device (14) for shaping conductor ends (34a-34h) sticking out in an axial direction from an arrangement of stator slots (20) of a stator component (18) extending annularly around a central axis to form a stator (50) of an electric machine, the device comprising:
a radial bending device (36) for widening the conductor ends (34a-34h) and including a plurality of widening tools (61-1, 61-2, 61-3) configured to bend the conductor ends (34a-34h) in the radial direction such that, after bending, a first part of the conductor ends (34a-34h) is situated at a first radial position (58b) and a second part of the conductor ends (34a-34h) is situated at a second radial position (58c),
a circumferential bending device (38) for twisting the conductor ends (34a-34h) by bending in the circumferential direction, the circumferential bending device (38) comprising a first bending unit (64-1) rotatable in a first direction of rotation and having a first annular arrangement (66-1) of receiving pockets (68a, 68i), and a second bending unit (64-2) arranged concentrically thereto and rotatable in the second direction of rotation and having a second annular arrangement (66-2) of receiving pockets (68a, 68i),
and a controller (54) adapted to control the conductor end shaping device (14) to
a) widen the conductor ends (34a-34h) by bending the conductor ends (34a-34h) in a radial direction by means of the plurality of widening tools (61-1, 61-2, 61-3) of the radial bending device (36) such that the widening causes a first part of the conductor ends (34a-34h) to be situated at a first radial position (58b) and a second part of the conductor ends (34a-34h) to be situated at a second radial position (58c), and
b) twist the conductor ends (34a-34h) by bending in the circumferential direction by means of the circumferential bending device (38) by
b1) inserting the first part of conductor ends (34a-34h) widened to the first radial position (58b) in step a) into the first arrangement (66-1) of receiving pockets (68a, 68i), inserting the second part of conductor ends (34a-34h) widened to the second radial position (58c) in step a) into the second arrangement (66-2) of receiving pockets (68a, 68i), and
b2) oppositely rotating said first and second bending units (64-1, 64-2) to bend said first part of conductor ends (34a-34h) and said second part of conductor ends (34a-34h) in opposite circumferential directions,
**characterized in that** of the first and second bending devices (64-1, 64-2) the bending unit (64-1) that is located radially further out has radially inner receiving pockets (68i) open to the radially inner side, and the bending unit (64-2) that is located radially further in has radially outer receiving pockets (68a) open to the radially outer side, wherein a part of the receiving pockets (68a, 68i) of the first arrangement (66-1) is located at the first radial position (58b) and another part of the receiving pockets (68a, 68i) of the first arrangement (66-1) is radially offset thereto and located at a radially intermediate position (60) and/or a part of the receiving pockets (68a, 68i) of the second arrangement (66-2) is located at the second radial position (58c) and another part of the receiving pockets (68a, 68i) of the second arrangement (66-2) is radially offset thereto and located at a radially intermediate position (60),
**in that** the controller (54) is further designed, during the widening according to step a), to control the conductor end shaping device (14) to
a1) engage at least one individual conductor end (34a-34h) by at least one first widening tool (61-1) in order to bend the conductor end (34a-34h) thus engaged individually in the radial direction, and jointly engage at least one pair of radially adjacent conductor ends (34a-34h) by at least one second widening tool (61-2) to jointly bend said pair of radially adjacent conductor ends (34a-34h) in the radial direction, wherein said controller (54) is adapted to perform control of said widening tools (61-1, 61-2, 61-3) such that a third part of said conductor ends (34a-34h) is situated at at least one intermediate radial position (60) between said first and second radial positions
and **in that** the controller (54) is further adapted to control the conductor end shaping device (14) during insertion according to step b1) for
b1a) inserting conductor ends (34a-34h) widened to the at least one intermediate radial position (60) into a receiving pocket (68a, 68i) of the other part of the first or second arrangement (66-1, 66-2) and inserting a radially inner conductor end of each pair of conductor ends (34a-34h) jointly bent in step a1) into one of the radially outer receiving pockets (68a) and the radially outer conductor end of the pair into one of the radially inner receiving pockets (68i).

6. Conductor end shaping device (14) according to claim 5, **characterized in that** the controller (54) is adapted to control the widening tools (61-1, 61-2, 61-3) of the radial bending device (36) individually on the basis of individual dedicated radial bending control data sets for each individual conductor end (34a-34h) to be radially bent or for each pair of conductor ends to be jointly bent.

7. Conductor end shaping device (14) according to any one of the claims 5 or 6, **characterized in that** the radial bending device (36)
7.1 includes different widening tools (61-1, 61-2, 61-3) from the group of widening tools comprising a single widening tool for engaging a single conductor end (34a-34h), a pair-of-conductor-ends widening tool for engaging a pair of conductor ends (34a-34h) and a combination widening tool formed at different engagement sections for engaging a single conductor end (34a-34h) and for engaging a pair of conductor ends (34a-34h); and/or
7.1a includes, as widening tools (61-1, 61-2, 61-3), different grippers (62-1, 62-2, 62-3) from the group of grippers comprising a single gripper for gripping a single conductor end (34a-34h), a pair-of-conductor-ends gripper for gripping a pair of conductor ends (34a-34h) and a combination gripper formed at different gripping sections (82-1, 82-2) for gripping a single conductor end (34a-34h) and for gripping a pair of conductor ends (34a-34h); and/or
7.2 includes grippers (62-1, 62-2, 62-3) having a first gripping jaw (72a) and a second gripping jaw (72b) which are movable towards each other for gripping and away from each other for releasing, wherein a receiving groove for the conductor end(s) (34a-34h) to be gripped is formed between two shoulders (78, 80) on at least one of the gripping jaws (72a, 72b), which groove is configured to surround a single conductor end (34a-34h) in the case of a single gripper and a pair of conductor ends (34a-34h) in the case of a pair-of-conductor-ends grippers; and/or
7.3 includes a combination gripper having different gripping sections (82-1, 82-2), one (82-2) of which is formed for gripping a single conductor end (34a-34h) and another one (82-1) of which is formed for gripping a pair of conductor ends (34a-34h).

8. Conductor end shaping device (14) according to any one of claims 5 to 7, **characterized in that** the controller (54) is further adapted to control the radial bending device (36) to
a3) simultaneously engage by said widening tools (61-1, 61-2, 61-3) a plurality of conductor ends (34a-34h) sticking out at the same radial position from the stator slots (20) and releasing individual or pairs of the conductor ends (34a-34h) thus engaged after a different movement in the radial direction, so as to bend the first part to the first radial position (58b), the third part to the at least one intermediate radial position (60) and the second part to the second radial position (58c).

9. Conductor end shaping device (14) according to any one of claims 5 to 8, **characterized in that** the circumferential bending device (38) comprises as a first bending unit (64-1) a first twisting crown (70B) having an annular wall (84) at the axial end of which the first arrangement (66-1) of receiving pockets (68a, 68i) is formed, wherein radially inner receiving pockets (68i) are formed by inner grooves (86i) formed radially inwardly and open at the axial end and radially outer receiving pockets (68a) are formed by outer grooves (86a) formed radially outwardly and open at the axial end; and/or as a second bending unit (64-2) a second twisting crown (70c) having an annular wall (84) at the axial end of which the second arrangement (66-2) of receiving pockets (68a, 68i) is formed, wherein radially inner receiving pockets (68i) are formed by inner grooves (86i) formed radially inwardly and open at the axial end and radially outer receiving pockets (68a) are formed by outer grooves (86a) formed radially outwardly and open at the axial end.

10. Computer program comprising instructions for causing the conductor end shaping device (14) according to any one of claims 5 to 9 to perform the conductor end shaping method according to any one of claims 1 to 5.

## Revendications

1. Procédé de formage des extrémités de conducteur pour former les extrémités de conducteur (34a-34h) dépassant dans une direction axiale d'un arrangement de fentes de stator (20) d'un composant de stator (18) s'étendant de manière annulaire autour d'un axe central pour former un stator (50) d'une machine électrique, le procédé comprenant:
a) élargir les extrémités de conducteur (34a-34h) en pliant les extrémités de conducteur (34a-34h) dans une direction radiale au moyen d'une pluralité d'outils d'élargissement (61-1, 61-2, 61-3) d'un dispositif de pliage radial (36), de sorte que l'élargissement entraîne une première partie des extrémités de conducteur (34a-34h) à se situer à une première position radiale (58b) et une deuxième partie des extrémités de conducteur (34a-34h) à se situer à une deuxième position radiale (58c); et
b) tordre les extrémités de conducteur (34a-34h) en les pliant dans la direction circonférentielle à l'aide d'un dispositif de pliage circonférentiel (38), qui comporte une première unité de pliage (64-1) pouvant être tournée dans un premier sens de rotation et comportant un premier arrangement annulaire (66-1) de poches de réception (68a, 68i), et une deuxième unité de pliage (64-2) qui peut tourner dans le deuxième sens de rotation, qui est disposée concentriquement par rapport à la première unité de pliage (64-1) et qui a un deuxième arrangement annulaire (66-2) de poches de réception (68a, 68i), l'étape b) comprenant:
b1) l'insertion de la première partie des extrémités de conducteur (34a-34h) élargies à l'étape a) jusqu'à la première position radiale (58b) dans le premier arrangement (66-1) des poches de réception (68a, 68i), l'insertion de la deuxième partie des extrémités de conducteur (34a-34h) élargies à l'étape a) jusqu'à la deuxième position radiale (58c) dans le deuxième arrangement (66-2) des poches de réception (68a, 68i), et
b2) faire tourner de manière opposée la première unité de pliage (64-1) et la deuxième unité de pliage (64-2) pour plier la première partie des extrémités de conducteur (34b) et la deuxième partie des extrémités de conducteur (34c) dans des directions circonférentielles opposées,
**caractérisé en ce que** l'étape a) comprend:
a1) saisir au moins une extrémité de conducteur unique (34a-34h) par au moins un premier outil d'élargissement (61-1) pour plier l'extrémité de conducteur unique ainsi saisie (34a-34h) individuellement dans la direction radiale, et saisir au moins une paire d'extrémités de conducteur radialement adjacentes (34a-34h) conjointement par au moins un deuxième outil d'élargissement (61-2), plier conjointement la paire d'extrémités de conducteur radialement adjacentes (34a-34h) dans la direction radiale, l'étape a1) étant réalisée de telle sorte qu'une troisième partie des extrémités de conducteur (34a-34h) soit située à au moins une position radiale intermédiaire (60) entre la première et la deuxième position radiale (58b, 58c),
b0) fournir la première unité de pliage (64-1) et la deuxième unité de pliage (64-2) de sorte que l'unité de pliage (64-1, 64-2) qui est située radialement plus à l'extérieur présente des poches de réception radialement intérieures (68i) qui sont ouvertes vers le côté radialement intérieur, et l'unité de pliage (64-1, 64-2) qui est située radialement plus à l'intérieur présente des poches de réception radialement extérieures (68a) qui sont ouvertes vers le côté radialement extérieur, dans lequel une partie des poches de réception (68a, 68i) du premier arrangement (66-1) est située à la première position radiale (58b) et une autre partie des poches de réception (68a, 68i) du premier arrangement (66-1) est décalée radialement par rapport à celle-ci et située à une position radialement intermédiaire (60) et/ou une partie des poches de réception (68a, 68i) du deuxième arrangement (66-2) est située à la deuxième position radiale (58c) et une autre partie des poches de réception (68a, 68i) du deuxième arrangement (66-2) est décalée radialement par rapport à celle-ci et située à une position radialement intermédiaire (60), et
**en ce que** l'étape b1) comprend
b1a) l'insertion des extrémités de conducteur (34b-34g) élargies à au moins une position radialement intermédiaire (60) dans une poche de réception (68a, 68i) de l'autre partie des poches de réception (68a, 68i) du premier ou du deuxième arrangement (66-1, 66-
2) et en insérant une extrémité radialement intérieure de chaque paire d'extrémités de conducteur (34a-34h) pliées conjointement à l'étape a1) dans l'une des poches de réception radialement extérieures (68a) et l'extrémité radialement extérieure du conducteur de la paire dans l'une des poches de réception radialement intérieures (68i).

2. Procédé de formage des extrémités de conducteur selon la revendication 1, **caractérisé en ce que** l'étape a) comprend au moins une ou plusieurs des étapes suivantes
a0) fournir un ensemble de données de contrôle de pliage radial séparé pour chaque extrémité de conducteur (34a-34h) à plier radialement ou chaque paire d'extrémités de conducteur à plier conjointement et commander individuellement l'outil d'élargissement respectif (61-1, 61-2, 61-3) au moyen de l'ensemble de données de contrôle de pliage radial assigné à l'extrémité de conducteur (34a-34h) à plier,
a2) en utilisant simultanément différents outils d'élargissement (61-1, 61-2, 61-3) du groupe d'outils d'élargissement comprenant un outil d'élargissement unique pour saisir une seule extrémité de conducteur, un outil d'élargissement pour une paire d'extrémités de conducteur pour saisir une paire d'extrémités de conducteur, et un outil d'élargissement combiné formé à différentes sections d'engagement pour saisir une seule extrémité de conducteur (34a-34h) et pour saisir une paire d'extrémités de conducteur (34a-34h);
a2a) utiliser simultanément, en tant qu'outils d'élargissement (61-1, 61-2, 61-3), différentes pinces (62-1, 62-2, 62-3) du groupe de pinces comprenant une pince individuelle pour saisir une seule extrémité de conducteur, une pince pour saisir une paire d'extrémités de conducteur, et une pince combinée formée à différentes sections de préhension (82-1, 82-2) pour saisir une seule extrémité de conducteur (34a-34h) et pour saisir une paire d'extrémités de conducteur (34a-34h);
a3) saisir simultanément par lesdits outils d'élargissement (61-1, 61-2, 61-3) une pluralité d'extrémités de conducteur (34a-34h) dépassant à la même position radiale des fentes du stator (20) et libérer individuellement ou par paires les extrémités de conducteur ainsi saisies (34a-34h) après un mouvement différent dans la direction radiale de manière à plier la première partie à la première position radiale (58b), la troisième partie à au moins une position radiale intermédiaire (60) et la deuxième partie à la deuxième position radiale (58c).

3. Procédé de formage des extrémités de conducteur selon la revendication 2, **caractérisé en ce que** l'étape a0) comprend au moins une ou plusieurs des étapes suivantes:
a0a) générer les ensembles de données de contrôle de pliage radiale en fonction d'un schéma de bobinage souhaité pour le stator (50) à fabriquer;
a0b) générer un ensemble de données de contrôle maître pour une extrémité de conducteur (34a-34h) ou une paire d'extrémités de conducteur à plier de manière égale à un groupe d'extrémités de conducteur (34a-34h) ou de paires d'extrémités de conducteur, et
générer les autres ensembles de données de contrôle pour le groupe d'extrémités de conducteur (34a-34h) ou de paires d'extrémités de conducteur à plier de manière égale tout en copiant l'ensemble de données de contrôle maître;
a0c) paramétrer la position cible et le mouvement de pliage radial pour chaque extrémité de conducteur (34a-34h) afin de générer l'ensemble de données de commande de pliage radial.

4. Procédé de formage des extrémités de conducteur selon l'une quelconque des revendications précédentes, **caractérisé en ce que** l'étape b0) comprend au moins une ou plusieurs des étapes suivantes
b01) fournir, en tant que première unité de pliage (64-1), une première couronne de pliage en croisé (70B) ayant une paroi annulaire (84), à l'extrémité axiale de laquelle le premier arrangement (66-1) de poches de réception (68a, 68i) est formé, dans lequel les poches de réception radialement intérieures (68i) sont formées par des rainures intérieures (86i) formées radialement vers l'intérieur et ouvertes à l'extrémité axiale, et les poches de réception radialement extérieures (68a) sont formées par des rainures extérieures (86a) formées radialement vers l'extérieur et ouvertes à l'extrémité axiale;
b02) fournir, en tant que deuxième unité de pliage (64-1), une deuxième couronne de pliage en croisé (70C) ayant une paroi annulaire (84), à l'extrémité axiale de laquelle le deuxième arrangement (66-2) de poches de réception (68a, 68i) est formé, les poches de réception radialement intérieures (68i) étant formées par des rainures intérieures (86i) formées radialement vers l'intérieur et ouvertes à l'extrémité axiale, et les poches de réception radialement extérieures (68a) étant formées par des rainures extérieures (86a) formées radialement vers l'extérieur et ouvertes à l'extrémité axiale.

5. Dispositif (14) de formage des extrémités de conducteur (34a-34h) dépassant dans une direction axiale d'un arrangement de fentes de stator (20) d'un composant de stator (18) s'étendant de manière annulaire autour d'un axe central pour former un stator (50) d'une machine électrique, le dispositif comprenant:
un dispositif de pliage radial (36) pour élargir les extrémités de conducteur (34a-34h) et comprenant une pluralité d'outils d'élargissement (61-1, 61-2, 61-3) configurés pour plier les extrémités de conducteur (34a-34h) dans la direction radiale de sorte que, après la pliage,
une première partie des extrémités de conducteur (34a-34h) est située à une première position radiale (58b) et une deuxième partie des extrémités de conducteur (34a-34h) est située à une deuxième position radiale (58c),
un dispositif de pliage circonférentiel (38) pour plier en croisé les extrémités de conducteur (34a-34h) par pliage dans la direction circonférentielle, le dispositif de pliage circonférentiel (38) comprenant une première unité de pliage (64-1) rotative dans un premier sens de rotation et ayant un premier arrangement annulaire (66-1) de poches de réception (68a, 68i), et une deuxième unité de pliage (64-2) disposée concentriquement à celle-ci et rotative dans le deuxième sens de rotation et ayant un deuxième arrangement annulaire (66-2) de poches de réception (68a, 68i),
et un dispositif de commande (54) adapté pour commander le dispositif de formage des extrémités de conducteur (14) pour
a) élargir les extrémités de conducteur (34a-34h) en pliant les extrémités de conducteur (34a-34h) dans une direction radiale au moyen de la pluralité d'outils d'élargissement (61-1, 61-2, 61-3) du dispositif de pliage radial (36) de telle sorte que l'élargissement amène une première partie des extrémités de conducteur (34a-34h) à se situer à une première position radiale (58b) et une deuxième partie des extrémités de conducteur (34a-34h) à se situer à une deuxième position radiale (58c), et
b) plier en croisé les extrémités de conducteur (34a-34h) en les pliant dans la direction circonférentielle au moyen du dispositif de pliage circonférentiel (38) en b1) en insérant la première partie des extrémités de conducteur (34a-34h) élargie à la première position radiale (58b) à l'étape a) dans le premier arrangement (66-1) des poches de réception (68a, 68i), en insérant la deuxième partie des extrémités de conducteur (34a-34h) élargie à la deuxième position radiale (58c) à l'étape a) dans le deuxième arrangement (66-2) des poches de réception (68a, 68i), et
b2) faire tourner de manière opposée lesdites première et seconde unités de pliage (64-1, 64-2) pour plier ladite première partie des extrémités de conducteur (34a-34h) et ladite seconde partie des extrémités de conducteur (34a-34h) dans des directions circonférentielles opposées,
**caractérisé en ce que**, parmi les premier et deuxièmes dispositifs de pliage (64-1, 64-2), l'unité de pliage (64-1) qui est située radialement plus à l'extérieur présente des poches de réception radialement intérieures (68i) ouvertes vers le côté radialement intérieur, et l'unité de pliage (64-2) qui est située radialement plus à l'intérieur présente des poches de réception radialement extérieures (68a) ouvertes vers le côté radialement extérieur, dans lequel une partie des poches de réception (68a, 68i) du premier arrangement (66-1) est située à la première position radiale (58b) et une autre partie des poches de réception (68a, 68i) du premier arrangement (66-1) est décalée radialement par rapport à celle-ci et située à une position radialement intermédiaire (60) et/ou une partie des poches de réception (68a, 68i) du deuxième arrangement (66-2) est située à la deuxième position radiale (58c) et une autre partie des poches de réception (68a, 68i) du deuxième arrangement (66-2) est décalée radialement par rapport à celle-ci et située à une position radialement intermédiaire (60),
**en ce que** le dispositif de commande (54) est en outre conçu, pendant l'élargissement selon l'étape a), pour commander le dispositif de formage des extrémités de conducteur (14) pour a1) saisir au moins une extrémité de conducteur individuelle (34a-34h) par au moins un premier outil d'élargissement (61-1) afin de plier l'extrémité de conducteur (34a-34h) ainsi saisie individuellement dans la direction radiale, et saisir conjointement au moins une paire d'extrémités de conducteur radialement adjacentes (34a-34h) par au moins un deuxième outil d'élargissement (61-2) afin de plier conjointement ladite paire d'extrémités de conducteur radialement adjacentes (34a-34h) dans la direction radiale, dans lequel ledit dispositif de commande (54) est adapté pour commander lesdits outils d'élargissement (61-1, 61-2, 61-3) de manière à ce qu'une troisième partie desdites extrémités de conducteur (34a-34h) soit située à au moins une position radiale intermédiaire (60) entre lesdites première et deuxième positions radiales
et **en ce que** le dispositif de commande (54) est en outre adapté pour commander le dispositif de formage des extrémités de conducteur (14) pendant l'insertion conformément à l'étape b1) pour
b1a) insérer les extrémités de conducteur (34a-34h) élargies à au moins une position radiale intermédiaire (60) dans une poche de réception (68a, 68i) de l'autre partie du premier ou du deuxième arrangement (66-1, 66-2) et insérer une extrémité radialement intérieure de chaque paire d'extrémités de conducteur (34a-34h) pliées conjointement à l'étape a1) dans l'une des poches de réception radialement extérieures (68a) et l'extrémité radialement extérieure de la paire dans l'une des poches de réception radialement intérieures (68i).

6. Dispositif de formage des extrémités de conducteur (14) selon la revendication 5, **caractérisé en ce que** le dispositif de commande (54) est adapté pour commander les outils d'élargissement (61-1, 61-2, 61-3) du dispositif de pliage radial (36) individuellement sur la base d'ensembles de données de commande de pliage radial dédiés pour chaque extrémité de conducteur individuelle (34a-34h) à plier radialement ou pour chaque paire d'extrémités de conducteur à plier conjointement.

7. Dispositif de formage des extrémités de conducteur (14) selon l'une quelconque des revendications 5 ou 6, **caractérisé en ce que** le dispositif de pliage radial (36)
7.1 comprend différents outils d'élargissement (61-1, 61-2, 61-3) du groupe d'outils d'élargissement comprenant un outil d'élargissement unique pour saisir une seule extrémité de conducteurs (34a-34h), un outil d'élargissement pour une paire d'extrémités de conducteur pour saisir une paire d'extrémités de conducteur (34a-34h) et un outil d'élargissement combiné formé à différentes sections de préhension pour saisir une seule extrémité de conducteurs (34a-34h) et pour saisir une paire d'extrémités de conducteur (34a-34h); et/ou
7.1a comprend, en tant qu'outils d'élargissement (61-1, 61-2, 61-3), différentes pinces (62-1, 62-2, 62-3) du groupe de pinces comprenant une seule pince pour saisir une seule extrémité de conducteurs (34a-34h), une pince pour deux extrémités de conducteur pour saisir une paire d'extrémités de conducteur (34a-34h) et une pince combinée formée à différentes sections de préhension (82-1, 82-2) pour saisir une seule extrémité de conducteurs (34a-34h) et pour saisir une paire d'extrémités de conducteur (34a-34h); et/ou
7. 2 comprend des pinces (62-1, 62-2, 62-3) ayant une première mâchoire de préhension (72a) et une seconde mâchoire de préhension (72b) qui peuvent se rapprocher l'une de l'autre pour saisir et s'éloigner l'une de l'autre pour relâcher, dans lesquelles une rainure de réception pour la ou les extrémités de conducteur (34a-34h) à saisir est formée entre deux épaulements (78, 80) sur au moins une des mâchoires de préhension (72a, 72b), cette rainure étant configurée pour entourer une seule extrémité de conducteurs (34a-34h) dans le cas d'une pince unique et une paire d'extrémités de conducteur (34a-34h) dans le cas d'une pince pour deux extrémités de conducteur; et/ou
7.3 comprend une pince combinée ayant différentes sections de préhension (82-1, 82-2), dont l'une (82-2) est formée pour saisir une seule extrémité de conducteurs (34a-34h) et l'autre (82-1) est formée pour saisir une paire d'extrémités de conducteur (34a-34h).

8. Dispositif de formage des extrémités de conducteur (14) selon l'une quelconque des revendications 5 à 7, **caractérisé en ce que** le dispositif de commande (54) est en outre adapté pour commander le dispositif de pliage radial (36) pour
a3) saisir simultanément par lesdits outils d'élargissement (61-1, 61-2, 61-3) une pluralité d'extrémités de conducteur (34a-34h) dépassant à la même position radiale des fentes du stator (20) et libérer une ou des paires d'extrémités de conducteur (34a-34h) ainsi engagées après un mouvement différent dans la direction radiale, de manière à plier la première partie dans la première position radiale (58b), la troisième partie dans au moins une position radiale intermédiaire (60) et la deuxième partie dans la deuxième position radiale (58c).

9. Dispositif de formage des extrémités de conducteur (14) selon l'une quelconque des revendications 5 à 8, **caractérisé en ce que** le dispositif de pliage circonférentiel (38) comprend
comme première unité de pliage (64-1) une première couronne de pliage en croisé (70B) ayant une paroi annulaire (84) à l'extrémité axiale de laquelle le premier arrangement (66-1) de poches de réception (68a, 68i) est formé, dans lequel les poches de réception radialement intérieures (68i) sont formées par des rainures intérieures (86i) formées radialement vers l'intérieur et ouvertes à l'extrémité axiale et les poches de réception radialement extérieures (68a) sont formées par des rainures extérieures (86a) formées radialement vers l'extérieur et ouvertes à l'extrémité axiale; et/ou
comme deuxième unité de pliage (64-2), une deuxième couronne de pliage en croisé (70c) ayant une paroi annulaire (84) à l'extrémité axiale de laquelle le deuxième arrangement (66-2) de poches de réception (68a, 68i) est formé, dans laquelle les poches de réception radialement intérieures (68i) sont formées par des rainures intérieures (86i) formées radialement vers l'intérieur et ouvertes à l'extrémité axiale, et les poches de réception radialement extérieures (68a) sont formées par des rainures extérieures (86a) formées radialement vers l'extérieur et ouvertes à l'extrémité axiale.

10. Programme d'ordinateur comprenant des instructions pour amener le dispositif de formage des extrémités de conducteur (14) selon l'une quelconque des revendications 5 à 9 à exécuter le procédé de formage des extrémités de conducteur selon l'une quelconque des revendications 1 à 5.
